# EUROPÄISCHE PATENTSCHRIFT

(11) **EP 3 411 129 B1**
(45) Veröffentlichungstag und Bekanntmachung des Hinweises auf die Patenterteilung: **15.09.2021**
(21) Anmeldenummer: 16779051.8
(22) Anmeldetag: 06.10.2016
(51) Int. Cl.: B01D 46/00, B01D 46/10, B01D 46/42, B01D 50/00

(54) **FILTERELEMENT, ELEMENTRAHMEN EINES FILTERELEMENTS, FILTERBALG EINES FILTERELEMENTS, FILTERGEHÄUSE UND FILTER**
FILTER ELEMENT, ELEMENT FRAME OF A FILTER ELEMENT, FILTER BELLOWS OF A FILTER ELEMENT, FILTER HOUSING AND FILTER
ÉLÉMENT FILTRANT, CADRE D'UN ÉLÉMENT FILTRANT, SOUFFLET FILTRANT D'UN ÉLÉMENT FILTRANT, BOÎTIER DE FILTRE ET FILTRE

(30) Priorität: 03.02.2016 DE 102016001132
(43) Veröffentlichungstag der Anmeldung: 12.12.2018
(73) Patentinhaber: MANN+HUMMEL GmbH, 71636 Ludwigsburg (DE)
(72) Erfinder: KAUFMANN, Michael, 67149 Meckenheim (DE); RUHLAND, Klaus-Dieter, 67149 Meckenheim (DE)
(74) Vertreter: Mann + Hummel Intellectual Property
(86) Internationale Anmeldenummer: PCT/EP2016/073828
(87) Internationale Veröffentlichungsnummer: WO 2017/133796

(56) Entgegenhaltungen:
- EP-A1- 1 920 816
- DE-A1-102010 047 491
- DE-T5-112010 002 173
- US-A1- 2004 020 177
- US-A1- 2008 216 455

## Beschreibung

### Technisches Gebiet

Die Erfindung betrifft ein Filterelement eines Filters für insbesondere gasförmiges Fluid, insbesondere Luft, insbesondere einer Brennkraftmaschine, insbesondere eines Kraftfahrzeugs und/oder einer Maschine, welches in einer Einbaurichtung, welche parallel oder koaxial zu einer Einbauachse verläuft, in ein Filtergehäuse des Filters eingebaut werden kann, mit wenigstens einem Filterbalg aufweisend wenigstens ein Filtermedium, wobei der wenigstens eine Filterbalg auf bezüglich einer Elementachse, welche senkrecht oder quer zur Einbauachse verläuft, axial gegenüberliegenden Seiten jeweils eine Durchströmseite für Fluid aufweist, und mit wenigstens einer Dichtung, welche bezüglich der Elementachse umfangsmäßig wenigstens teilweise zusammenhängend wenigstens abschnittsweise an einer bezüglich der Elementachse radial äußeren Umfangsseite des Filterelements angeordnet ist.

Außerdem betrifft die Erfindung einen Filter für insbesondere gasförmiges Fluid, insbesondere Luft, insbesondere einer Brennkraftmaschine, insbesondere eines Kraftfahrzeugs, mit wenigstens einem Filtergehäuse, in dem wenigstens ein Filterelement, angeordnet ist, das wenigstens eine Filtergehäuse wenigstens eine Einlassöffnung für zu reinigendes Fluid und wenigstens eine Auslassöffnung für gereinigtes Fluid aufweist, wobei wenigstens ein Filterelement in einem Elementaufnahmeraum des wenigstens einen Filtergehäuses so angeordnet ist oder werden kann, dass es die wenigstens eine Einlassöffnung von der wenigstens einen Auslassöffnung trennt, wobei das Filtergehäuse einen Gehäusekörper mit wenigstens einer Einbauöffnung zu dem Elementaufnahmeraum aufweist, durch die das wenigstens eine Filterelement in einer Einbaurichtung, welche parallel oder koaxial zu einer Einbauachse verläuft, in den Elementaufnahmeraum des Gehäusekörpers eingebracht werden kann, und das wenigstens eine Filtergehäuse wenigstens einen Gehäusedeckel aufweisen, mit dem die öffenbare Einbauöffnung verschlossen werden kann, wobei die wenigstens eine Einbauöffnung in einer bezüglich einer Gehäuseachse seitlichen Querseite des Gehäusekörpers angeordnet ist, und das wenigstens eine Filtergehäuse wenigstens eine Dichtfläche zur Anlage wenigstens einer Dichtung des wenigstens eines Filterelements aufweist, welche die Gehäuseachse wenigstens teilumfänglich umgibt.

### Stand der Technik

Aus dem Stand der Technik sind verschiedene Luftfilter bekannt, in welchen Filterelemente von der Seite mittels schubladenartiger Einschubrahmen in ein Filtergehäuse eingebaut werden, beispielsweise aus EP 1 920 816 A1, US 2008/216445 A1, US 2004/020177 A1 oder DE 11 2010 002 173 T5. Das Dokument DE 10 2010 047491 A1 zeigt einen Filtereinsatz mit einem Filtereinsatzrahmen, welcher eine Kontaktfläche mit Höhenprofil aufweist. Aus DE 10 2009 060 517 A1 ist eine Filtereinrichtung, insbesondere zur Filterung von Ansaugluft einer Verbrennungskraftmaschine, bekannt. Die Filtereinrichtung umfasst einen Vorabscheider, der insbesondere als Zyklonvorabscheider ausgebildet ist, ferner ein in einem Gehäuseschacht des Filtergehäuses auswechselbar angeordnetes Hauptfilterelement sowie ein diesem in Strömungsrichtung des zu reinigenden Fluides nachgeschaltetes Sekundärfilterelement. Der Gehäuseschacht umfasst zur Erleichterung der Vormontage des Hauptfilterelementes in diesem Einführstege. Das Hauptfilterelement ist insbesondere als Doppelbalgfilter, einen ersten radial innen liegenden Filterbalg und einen diesen umschließenden zweiten radial außen liegenden Filterbalg aufweisend, ausgebildet. Beim Schließen eines den Gehäuseschacht verschließenden Wartungsdeckels wird die auf das Hauptfilterelement wirkende Dichtkraft erzeugt und im geschlossenen Zustand des Wartungsdeckels aufrechterhalten.

Der Erfindung liegt die Aufgabe zugrunde, ein Filterelement und einen Filter der eingangs genannten Art zu gestalten, bei denen ein Einbau des Filterelements in das Filtergehäuse und/oder einen Ausbau des Filterelements aus dem Filtergehäuse verbessert, insbesondere vereinfacht werden kann. Ferner soll eine Dichtwirkung einer Dichtvorrichtung zwischen dem Filterelement in dem Filtergehäuse verbessert werden.

### Offenbarung der Erfindung

Diese Aufgabe wird bei dem Filterelement erfindungsgemäß durch die Merkmale des Anspruchs 1 gelöst. Das Filterelement weist an wenigstens einer Außenseite wenigstens eine Dichtungs-Abstützvorrichtung auf. Die wenigstens eine Dichtungs-Abstützvorrichtung kann auf der einer axialen Dichtungsfläche der wenigstens einen Dichtung bezüglich der Elementachse axial abgewandten Dichtungsrückseite mit einer der wenigstens einen Dichtung zugewandten elementseitigen Abstützfläche an der wenigstens einen Dichtung kraftübertragend anliegen. An der wenigstens einen Dichtungs-Abstützvorrichtung kann auf der der wenigstens einen Dichtung abgewandten Seite wenigstens eine entsprechende Anpresseinrichtung des Filtergehäuses angreifen. Eine durch die Anpresseinrichtung in die wenigstens eine Dichtungs-Abstützvorrichtung eingeleitete Anpresskraft kann über die wenigstens eine Dichtungs-Abstützvorrichtung an die wenigstens eine Dichtung übertragen werden. Die wenigstens eine Dichtung kann so mit einer entsprechend erhöhten Dichtungskraft gegen eine entsprechende gehäuseseitige Dichtfläche gepresst werden. Auf diese Weise kann eine Dichtwirkung verbessert werden. Durch das Zusammenwirken der wenigstens einen Dichtungs-Abstützvorrichtung mit wenigstens einer entsprechenden Anpresseinrichtung des Gehäuses, insbesondere eines Gehäusekörpers und/oder eines Gehäusedeckels, können durch die Form und/oder Orientierung entsprechender Abstützflächen, Dichtflächen und Anpressflächen relativ zueinander, relativ zu einer Einbauachse und/oder relativ zu einer Hauptachse beim Einbau wirkende Einbaukräfte und/oder beim Schließen des Gehäusedeckels wirkende Schließkräfte und/oder beim Halten des Filterelements in dem Filtergehäuse wirkende Haltekräfte so umgeleitet werden, dass sie untereinander verbesserte Wirkungen erzielen und/oder eine verbesserte Dichtwirkung der wenigstens einen Dichtung erreicht werden kann. So kann insbesondere eine Dichtwirkung verbessert werden und/oder durch Verbesserung der Hebelverhältnisse zum Einbau des Filterelements und/oder Schließen des Gehäusedeckels erforderliche Kräfte verringert werden.

Die Elementachse durchsticht die entsprechenden Durchströmflächen des Filterelements auf den axial gegenüberliegenden Durchströmseiten. Die Durchströmflächen werden von dem Fluid durchströmt. Die Elementachse gibt grob die Haupt-Durchströmrichtung des Fluids durch das Filterelement an, wobei das tatsächliche Strömungsprofil des Fluids nicht notwendigerweise homogen sein muss. Man kann die Haupt-Durchströmrichtung auch als mittlere Strömungsrichtung bezeichnen. Im montierten Zustand des Filters kann die Elementachse des Filterelements mit einer Gehäuseachse des Filtergehäuses zusammenfallen. Die Elementachse und die Gehäuseachse können auch als Hauptachse bezeichnet werden. Vorteilhafterweise kann die Einbauachse senkrecht oder schräg zur Hauptachse, insbesondere zur Elementachse und/oder zur Gehäuseachse, verlaufen. So kann das Filterelement von der Seite in das Filtergehäuse eingebaut werden.

Bei einer vorteilhaften Ausführungsform können wenigstens eine der wenigstens einen Dichtung zugewandte elementseitige Abstützfläche und wenigstens eine der wenigstens einen Dichtung abgewandte elementseitige Abstützfläche wenigstens einer Dichtungs-Abstützvorrichtung wenigstens abschnittsweise schräg zueinander verlaufen. Auf diese Weise können die Richtungskomponenten der einwirkenden Kräfte entsprechend an die Orientierungen der wenigstens einen Dichtung und/oder der wenigstens einen gehäuseseitigen Dichtfläche relativ zur Elementachse oder Gehäuseachse angepasst werden.

Vorteilhafterweise können wenigstens eine dichtungszugewandte elementseitige Abstützfläche und wenigstens einem dichtungsabgewandte elementseitige Abstützfläche in Richtung senkrecht zur Elementachse und senkrecht zur Einbauachse betrachtet wenigstens abschnittsweise schräg zueinander verlaufen.

Vorteilhafterweise können wenigstens ein Abschnitt wenigstens einer dichtungszugewandten elementseitigen Abstützfläche und wenigstens ein Abschnitt wenigstens einer dichtungsabgewandten elementseitigen Abstützfläche unter einem Winkel von zwischen etwa 10° und etwa 30°, insbesondere etwa 20°, zueinander geneigt sein. Auf diese Weise kann ein Verhältnis der aufzuwendenden Kraft beim Einbau des Filterelements in das Filtergehäuse und eine dabei mittels der wenigstens einen gehäuseseitigen Anpresseinrichtung über die wenigstens eine Dichtungs-Abstützvorrichtung auf die wenigstens eine Dichtung wirkende Anpresskraft verbessert werden. Vorteilhafterweise kann wenigstens ein Abschnitt wenigstens einer dichtungszugewandten elementseitigen Abstützfläche unter einem Winkel von zwischen etwa 60° und etwa 80°, insbesondere etwa 70°, zur Elementachse, insbesondere zur Hauptachse und/oder Gehäuseachse, geneigt sein. Vorteilhafterweise kann wenigstens ein Abschnitt wenigstens einer dichtungsabgewandten elementseitigen Abstützfläche unter einem Winkel von zwischen etwa 80° und etwa 100°, insbesondere etwa 90°, zur Elementachse, insbesondere der Hauptachse und/oder Gehäuseachse, geneigt sein.

Erfindungsgemäß bilden wenigstens ein Teil wenigstens einer dichtungszugewandten elementseitigen Abstützfläche und wenigstens ein Teil wenigstens einer dichtungsabgewandten elementseitigen Abstützfläche der wenigstens einen Dichtungs-Abstützvorrichtung insbesondere in Richtung senkrecht zur Elementachse und senkrecht zur Einbauachse betrachtet eine keilartige Anordnung, wobei eine Spitze der keilartigen Anordnung etwa in Einbaurichtung zeigt. Durch eine entsprechende Verspannung beim Einbringen des Filterelements in Einbaurichtung in das Filtergehäuse kann durch die keilförmige Abstützung ein Anpressdruck der wenigstens einen Dichtung gegen eine gehäuseseitige Dichtfläche erhöht werden.

Bei einer weiteren vorteilhaften Ausführungsform kann wenigstens eine dichtungsabgewandte elementseitige Abstützfläche wenigstens abschnittsweise parallel oder schräg zu wenigstens einer Durchströmfläche, insbesondere einer Durchströmebene, des Filterbalgs und/oder parallel oder schräg zur Einbauachse verlaufen. Auf diese Weise kann die wenigstens eine dichtungsabgewandte elementseitige Abstützfläche beim Einbau des Filterelements in das Filtergehäuse entsprechend an einer gehäuseseitigen Anpressfläche entlang geführt werden.

Vorteilhafterweise kann wenigstens eine Dichtungs-Abstützvorrichtung an wenigstens einer Längsseite des Filterelements angeordnet sein. Auf diese Weise kann die Dichtungs-Abstützvorrichtung beim Einbau in das Filtergehäuse an wenigstens einer entsprechenden gehäuseseitigen Anpressvorrichtung entlang geführt werden. Wenigstens eine gehäuseseitige Anpressvorrichtung kann entsprechend innen an wenigstens einer Längswand des Gehäuses angeordnet sein. Als Längsseiten des Filterelements werden hier die Seiten bezeichnet, welche sich zwischen den Durchströmseiten und den Querseiten des Filterelements bezüglich einer Querachse des Filterelements axial auf gegenüberliegenden Seiten erstrecken. Als Längsseiten des Gehäuses werden entsprechend die Seiten bezeichnet, welche sich zwischen den Querseiten, einer Einlassseite und einer Auslassseite des Gehäuses erstrecken. Als Querseiten werden jeweils die Seiten des Filterelements und des Filtergehäuses bezeichnet, welche sich bezüglich der Einbauachse axial gegenüberliegen. Eine der Querseiten des Filtergehäuses kann wenigstens eine Einbauöffnung für das wenigstens eine Filterelement aufweisen. Entsprechendes gilt für den Gehäusedeckel. Der Gehäusedeckel kann auch als Wartungsdeckel bezeichnet werden. Durch die Öffnung des Gehäusedeckels können die im Elementinnenraum enthaltenen Bauteile, insbesondere das wenigstens eine Filterelement, eingebaut, ausgebaut und gewartet werden.

Vorteilhafterweise kann wenigstens eine dichtungszugewandte elementseitige Abstützfläche wenigstens einer Dichtungs-Abstützvorrichtung über ihre gesamte Erstreckung entlang der wenigstens einen Längsseite des Filterelements an der wenigstens einen Dichtung insbesondere flächig anliegen. Auf diese Weise kann eine gleichmäßige flächige Abstützung erreicht werden.

Vorteilhafterweise kann wenigstens eine dichtungsabgewandte elementseitige Abstützfläche wenigstens einer Dichtungs-Abstützvorrichtung lediglich über einen Teil entlang wenigstens einen Längsseite des Filterelements schräg zu wenigstens einer dichtungszugewandten elementseitigen Abstützfläche der wenigstens einen Dichtungs-Abstützvorrichtung verlaufen. Auf diese Weise kann ein Raum neben der wenigstens einen dichtungsabgewandten elementseitigen Abstützfläche für andere Bauteile, insbesondere zum Einführen wenigstens eines Teils, insbesondere eines Anpressschwertes, des Gehäusedeckels, verwendet werden.

Bei einer weiteren vorteilhaften Ausführungsform kann wenigstens eine Dichtungs-Abstützvorrichtung eine bezüglich der Einbaurichtung vordere dichtungsabgewandte elementseitige Abstützfläche und wenigstens eine hintere dichtungsabgewandte elementseitige Abstützfläche aufweisen. Auf diese Weise kann die wenigstens eine Dichtung in mehreren Bereichen abgestützt werden, die voneinander entfernt sind. So kann eine gleichmäßigere Dichtfunktion erreicht werden. Entsprechend kann die wenigstens eine Dichtungs-Abstützvorrichtung eine vordere dichtungszugewandte elementseitige Abstützfläche und wenigstens eine hintere dichtungszugewandte elementseitige Abstützfläche aufweisen.

Vorteilhafterweise können eine vordere dichtungsabgewandte elementseitige Abstützfläche und wenigstens eine hintere dichtungsabgewandte elementseitige Abstützfläche insbesondere einstückig ineinander übergehen. Entsprechend können eine vordere dichtungszugewandte elementseitige Abstützfläche und wenigstens eine hintere dichtungszugewandte elementseitige Abstützfläche insbesondere einstückig ineinander übergehen.

Vorteilhafterweise können wenigstens eine vordere dichtungszugewandte elementseitige Abstützfläche und wenigstens eine hintere dichtungszugewandte elementseitige Abstützfläche in einer gemeinsamen Ebene oder in unterschiedlichen Ebenen verlaufen.

Erfindungsgemäß sind die vorderen elementseitigen Abstützflächen im Bereich der bzgl. der Einbaurichtung vorderen Querseite des wenigstens einen Filterelements und die hinteren elementseitigen Abstützflächen an einer hinteren Querseite des wenigstens einen Filterelements angeordnet. Auf diese Weise kann eine Abstützung im Bereich der entsprechenden Querseite erfolgen.

Vorteilhafterweise kann wenigstens eine hintere dichtungsabgewandte elementseitige Abstützfläche bezüglich der wenigstens einen vorderen dichtungsabgewandten elementseitigen Abstützfläche zu wenigstens einer dichtungszugewandten elementseitigen Abstützfläche hin versetzt sein. In den dadurch gewonnenen Raum kann ein entsprechendes Teil, insbesondere ein Anpressschwert, des Gehäusedeckels eingeführt werden.

Vorteilhafterweise können ein Neigungswinkel zwischen wenigstens einer vorderen dichtungszugewandten elementseitigen Abstützfläche und wenigstens einer vorderen dichtungsabgewandten elementseitigen Abstützfläche und ein Neigungswinkel zwischen wenigstens einer hinteren dichtungszugewandten elementseitigen Abstützfläche und wenigstens einer entsprechenden wenigstens einen hinteren dichtungsabgewandten elementseitigen Abstützfläche unterschiedlich sein. Auf diese Weise können die Abstützflächen mit unterschiedlich gerichteten Abschnitten des Filtergehäuses abgestützt werden.

Vorteilhafterweise können wenigstens eine hintere dichtungsabgewandte elementseitige Abstützfläche und wenigstens eine entsprechende hintere dichtungszugewandte elementseitige Abstützfläche wenigstens abschnittsweise parallel zueinander verlaufen.

Bei einer weiteren vorteilhaften Ausführungsform können wenigstens eine vordere dichtungsabgewandte elementseitige Abstützfläche und wenigstens eine hintere dichtungsabgewandte elementseitige Abstützfläche unter einem Winkel von zwischen etwa 10° und etwa 30°, insbesondere etwa 20°, zueinander geneigt sein und/oder wenigstens eine hintere dichtungsabgewandte elementseitige Abstützfläche parallel zu wenigstens einer insbesondere hinteren dichtungszugewandten elementseitigen Abstützfläche verlaufen. Auf diese Weise kann eine keilförmige Abstützkulisse und ein keilförmiger Raum für ein entsprechendes Teil, insbesondere ein Anpressschwert, des Gehäusedeckels realisiert werden.

Bei einer weiteren vorteilhaften Ausführung kann wenigstens eine Dichtungs-Abstützvorrichtung an einem sich wenigstens bezüglich der Elementachse teilumfänglich erstreckenden Rahmen, insbesondere einem Elementrahmen oder Stützrahmen, oder als ein derartiger realisiert sein.

Vorteilhafterweise kann der Rahmen insbesondere durchgängig formstabil sein. Auf diese Weise können entsprechende Anpresskräfte über den Rahmen an die wenigstens eine Dichtung übertragen werden.

Bei einer weiteren vorteilhaften Ausführungsform kann wenigstens eine Dichtungs-Abstützvorrichtung trennbar oder nicht zerstörungsfrei trennbar mit wenigstens einem Filterbalg des Filterelements verbunden sein. Trennbare Dichtungs-Abstützvorrichtungen haben den Vorteil, dass sie bei einem Wechsel des Filterbalgs wieder verwendet werden können. Nicht trennbare Dichtungs-Abstützvorrichtung können gemeinsam mit dem wenigstens einen Filterbalg hergestellt und stabil verbunden werden.

Vorteilhafterweise kann das Filterelement wenigstens einen Elementrahmen aufweisen, in dem wenigstens ein Filterbalg angeordnet sein kann. Mit dem Elementrahmen kann der Filterbalg geschützt werden. Ferner können mit dem Elementrahmen Kräfte insbesondere zum Anpressen der Dichtung übertragen werden. So kann der Filterbalg mit geringerer Belastung, insbesondere kraftfrei, in dem Filtergehäuse gehalten werden.

Vorteilhafterweise kann wenigstens ein Filterbalg trennbar oder nicht trennbar mit wenigstens einem Elementrahmen verbunden sein. Bei einer trennbaren Ausgestaltung kann der wenigstens eine Elementrahmen nach einem Austausch des wenigstens einen Filterbalgs wieder verwendet werden. Der wenigstens eine Elementrahmen kann als Wechselrahmen ausgestaltet sein. Vorteilhafterweise kann der wenigstens eine Filterbalg axial zur Elementachse in den wenigstens einen Elementrahmen gesteckt und entsprechend aus diesem ausgebaut werden. Bei einer nichttrennbaren Ausgestaltung können wenigstens ein Filterbalg und wenigstens ein Elementrahmen gemeinsam vormontiert und ausgetauscht werden.

Vorteilhafterweise kann wenigstens ein Elementrahmen und/oder wenigstens ein Filterbalg wenigstens einen Teil wenigstens einer Fixiereinrichtung aufweisen zum Halten des wenigstens einen Filterbalgs in dem wenigstens einen Elementrahmen. Mit der wenigstens einen Fixiereinrichtung kann wenigstens ein Filterbalg in dem wenigstens einen Elementrahmen in der korrekten Einbauposition gehalten werden. Wenigstens eine Fixiereinrichtung kann dazu dienen, dass wenigstens ein Filterbalg insbesondere beim Ausklopfen nicht aus dem wenigstens einen Elementrahmen herausfallen kann. Der wenigstens eine Filterbalg kann so ausgeklopft werden, ohne dass er zuvor aus dem wenigstens einen Elementrahmen herausgenommen werden muss.

Vorteilhafterweise kann wenigstens eine Fixiereinrichtung als formschlüssige und/oder kraftschlüssige Verbindung realisiert sein. Derartige Fixiereinrichtungen können so ausgestaltet sein, dass Sie bei Bedarf wieder gelöst werden können. Vorteilhafterweise kann wenigstens eine Fixiereinrichtung als Rastverbindung realisiert sein, welche einfach hergestellt und verbunden/gelöst werden kann.

Vorteilhafterweise kann wenigstens ein Filterbalg und/oder wenigstens ein Elementrahmen wenigstens eine Rastnase und/oder wenigstens eine Rastaufnahme einer Rastverbindung aufweisen.

Vorteilhafterweise kann wenigstens ein Elementrahmen wenigstens einen Griff aufweisen. An dem wenigstens einen Griff kann das Filterelement gefasst und transportiert werden. Vorteilhafterweise kann wenigstens ein Griff in eine Dichtungs-Abstützvorrichtung integriert oder mit einer derartigen verbunden sein. So kann ein Herstellungsaufwand oder ein Platzbedarf verringert werden.

Vorteilhafterweise kann wenigstens ein Elementrahmen wenigstens eine Längsseite und/oder wenigstens eine Querseite wenigstens eines Filterbalgs wenigstens abschnittsweise abdecken. Auf diese Weise kann die wenigstens eine entsprechende Seite des wenigstens einen Filterbalgs flächig geschützt werden.

Vorteilhafterweise kann wenigstens ein Elementrahmen wenigstens einen Filterbalg umfangsmäßig insbesondere zusammenhängend umgeben. Auf diese Weise kann die Stabilität des Filterelements insgesamt verbessert werden.

Vorteilhafterweise kann wenigstens ein Elementrahmen auf wenigstens einer Durchströmseite wenigstens eines Filterbalgs, insbesondere auf bezüglich der Elementachse axial gegenüberliegenden Seiten, offen sein. Auf diese Weise kann Fluid durch die entsprechenden Öffnungen des Elementrahmens strömen. Vorteilhafterweise kann wenigstens ein Elementrahmen auf wenigstens einer offenen Seite wenigstens einen Rahmensteg aufweisen. Mit dem wenigstens einen Rahmensteg kann die offene Seite stabilisiert werden. Ferner kann wenigstens ein Filterbalg an dem wenigstens einen Rahmensteg abgestützt werden.

Vorteilhafterweise kann der Elementrahmen etwa die gleiche Form und Größe aufweisen wie der wenigstens eine Filterbalg. Auf diese Weise kann das Filterelement insgesamt kompakter und platzsparend realisiert werden.

Vorteilhafterweise kann wenigstens ein Elementrahmen Kunststoff aufweisen oder daraus bestehen. Der wenigstens eine Elementrahmen kann einfach nach einem Kunststoffformverfahren hergestellt werden.

Vorteilhafterweise kann wenigstens eine bezüglich der Elementachse stirnseitige Dichtungsfläche wenigstens einer Dichtung wenigstens abschnittsweise schräg zur Einbauachse und/oder zur Elementachse verlaufen. Auf diese Weise kann die wenigstens eine Dichtung gegen eine entsprechend schräg verlaufende gehäuseseitige Dichtfläche abdichten. Beim Einbau des wenigstens einen Filterelements in das Filtergehäuse kann durch die entsprechende Einbaukraft in Einbaurichtung und die entsprechende Anpresskraft des Filtergehäuses parallel zur Elementachse/Gehäuseachse eine entsprechende Kraftkomponente zur Erhöhung der Dichtungskraft realisiert werden.

Vorteilhafterweise kann wenigstens ein Filterbalg auf wenigstens einer Durchströmseite wenigstens abschnittsweise schräg zur Elementachse verlaufen. Auf diese Weise kann ein prismatischer Filterbalg realisiert werden.

Wenigstens eine Dichtung kann so angeordnet sein, dass sie eine Reinfluidseite des Filterelements von einer Rohfluidseite trennen kann. Vorteilhafterweise kann wenigstens eine Dichtung einer Ausströmseite des Filterelements zugewandt, insbesondere an einer ausströmseitigen Stirnseite des Filterelements angeordnet, sein. Auf diese Weise kann die wenigstens eine Dichtung direkt an der Reinfluidseite des Filterelements abdichten.

Vorteilhafterweise kann wenigstens ein Filterbalg, insbesondere das Filterelement, in Richtung der Elementachse betrachtet einen eckigen, insbesondere rechteckigen, Querschnitt aufweisen. Auf diese Weise kann ein Raumbedarf im Verhältnis zu einer Filterfläche verbessert werden.

Vorteilhafterweise kann sich wenigstens ein Filterbalg, insbesondere das Filterelement, in Einbaurichtung axial zur Einbauachse betrachtet wenigstens in bezüglich der Elementachse axialer Richtung verjüngen. Auf diese Weise kann der Filter mit Filtergehäuse und Filterelement insgesamt kompakter aufgebaut werden.

Vorteilhafterweise kann wenigstens ein Filtermedium insbesondere zickzackförmig gefaltet und/oder gebogen sein. Auf diese Weise kann die Filterfläche im Verhältnis zu den Außenmaßen des wenigstens einen Filterbalgs vergrößert werden.

Vorteilhafterweise kann wenigstens ein Teil der Faltkanten des gefalteten Filtermediums wenigstens auf einer Durchströmseite quer, insbesondere senkrecht, zur Elementachse und quer, insbesondere senkrecht, zur Einbauachse verlaufen. Auf diese Weise kann eine Höhe in Richtung der Elementachse des Filterbalgs in Richtung der Einbauachse betrachtet variieren. Man kann von einem Filterbalg mit gefaltetem Filtermedium mit entlang der Einbaurichtung sich ändernden, insbesondere variablen, Faltenhöhen sprechen. So kann mit dem Filterbalg ein etwa keilförmiges oder prismatisches Filterelement realisiert werden.

Vorteilhafterweise kann wenigstens eine Dichtung an wenigstens einem Filterbalg, insbesondere im Bereich einer Stirnseite eines Filterbalgs, nicht zerstörungsfrei trennbar oder trennbar mit dem wenigstens einen Filtermedium verbunden sein. Die wenigstens eine nicht zerstörungsfrei trennbare Dichtung kann stabil und/oder einfach mit dem wenigstens einen Filtermedium werden. Eine trennbare Dichtung kann ausgetauscht werden.

Vorteilhafterweise kann wenigstens eine Dichtung elastisches Material aufweisen oder daraus bestehen. Auf diese Weise können entsprechende Toleranzen ausgeglichen und eine Dichtfunktion verbessert werden. Vorteilhafterweise kann wenigstens eine Dichtung insbesondere geschäumtes Polyurethan (PUR) aufweisen oder daraus bestehen.

Vorteilhafterweise kann wenigstens eine Dichtung mittels einer stoffschlüssigen und/oder kraftschlüssigen und/oder formschlüssigen Verbindung, insbesondere einer Klebeverbindung, einer Schweißverbindung, einer geschäumten und/oder gegossenen Verbindung, einer Steckverbindung, einer Rastverbindung oder dergleichen, mit dem wenigstens einen Filterbalg verbunden sein.

Vorteilhafterweise kann wenigstens eine Verstärkung, insbesondere ein Verstärkungsrahmen, insbesondere aus Kunststoff, an/in der wenigstens einen Dichtung, insbesondere Dichtungsspur, angeordnet, insbesondere eingebettet, sein. Auf diese Weise kann die wenigstens eine Dichtung zusätzlich abgestützt werden.

Die wenigstens eine Verstärkung kann vorteilhafterweise Kunststoff aufweisen oder daraus bestehen. Auf diese Weise kann die wenigstens eine Verstärkung einfach hergestellt werden. Ferner kann die wenigstens ein Verstärkung mit einer gewissen Elastizität ausgestattet sein.

Vorteilhafterweise kann sich die wenigstens eine Verstärkung im Bereich der der Dichtungsfläche der wenigstens einen Dichtung bezüglich der Elementachse axial abgewandten Rückseite der wenigstens einen Dichtung befinden. Auf diese Weise kann dort wenigstens eine elementseitige Abstützfläche wenigstens einer Dichtung-Abstützvorrichtung kraftübertragend angreifen.

Vorteilhafterweise kann sich wenigstens eine Dichtungsfläche wenigstens einer Dichtung entlang einer Dichtungsebene erstrecken. Auf diese Weise kann eine ebene, flächige Abdichtung realisiert werden.

Vorteilhafterweise kann das Filterelement, insbesondere wenigstens eine Dichtungs-Abstützvorrichtung und/oder gegebenenfalls wenigstens ein Elementrahmen, auf seiner bezüglich der Einbaurichtung axial zur Einbauachse hinteren Seite wenigstens eine wenigstens mit einer Richtungskomponente bezüglich der Einbaurichtung axial gerichtete Andrückstelle aufweisen. An der wenigstens einen Andrückstelle kann wenigstens ein Andrückabschnitt wenigstens eines Gehäusedeckels angreifen. Auf diese Weise kann das Filterelement, insbesondere die wenigstens eine Dichtungs-Abstützvorrichtung, bzgl. der Einbauachse axial in das Filtergehäuse gedrückt werden. So kann wenigstens eine Dichtungs-Abstützvorrichtung zwischen wenigstens einer gehäuseseitigen Dichtfläche und wenigstens einer Andrückstelle eingespannt oder eingeklemmt werden. Eine Dichtwirkung der wenigstens einen Dichtung kann so weiter verbessert werden.

Vorteilhafterweise kann das Filterelement, insbesondere wenigstens ein Filterbalg, auf wenigstens einer Durchströmseite wenigstens einen Kantenschutz aufweisen. Mit dem wenigstens einen Kantenschutz können entsprechende Kanten und Ränder des Filterelements, insbesondere wenigstens eines Filterbalgs und/oder wenigstens eines Elementrahmens, geschützt werden. Mit dem Kantenschutz kann das Filterelement insbesondere beim Ausklopfen vor Beschädigung geschützt werden. Das Filterelement, insbesondere der Filterbalg, kann mit der Durchströmseite mit dem Kantenschutz gegen eine harte Fläche geklopft werden, um den wenigstens einen Filterbalg von Partikeln zu befreien.

Vorteilhafterweise kann wenigstens ein Kantenschutz wenigstens den Filterbalg und/oder ggf. wenigstens einen Elementrahmen wenigstens in bezüglich der Elementachse axialer Richtung überragen.

Vorteilhafterweise kann der Kantenschutz aus elastischem Material, insbesondere Polyurethan, sein oder derartiges Material aufweisen. Polyurethan kann einfach angeschäumt oder aufgeschäumt werden.

Vorteilhafterweise kann der Kantenschutz sich wenigstens abschnittsweise entlang eines bzgl. der Elementachse umfangsmäßigen Randes des Filterelements, insbesondere des wenigstens einen Filterbalgs, erstrecken. Vorteilhafterweise kann der wenigstens eine Kantenschutz an wenigstens einem Filterbalg angeordnet sein.

Vorteilhafterweise kann der Kantenschutz nicht zerstörungsfrei trennbar mit dem wenigstens einen Filterbalg verbunden sein. Dabei kann es sich vorteilhafterweise um eine stoffschlüssige und/oder formschlüssige und/oder kraftschlüssige Verbindung handeln.

Vorteilhafterweise kann wenigstens ein Kantenschutz an/in/auf den wenigstens einen Filterbalg, insbesondere Filtermedium, geschäumt, geklebt, geschweißt oder dergleichen sein. Wenigstens ein Kantenschutz kann durch Öffnungen wenigstens eines etwaigen Elementrahmens ragen. Auf diese Weise kann der wenigstens eine Kantenschutz den Elementrahmen überragen und schützen. Wenigstens ein Filterbalg kann so beim Ausklopfen in dem Elementrahmen verbleiben und dort geschützt werden. Der wenigstens eine Kantenschutz kann Aussparungen für entsprechende Abschnitte, insbesondere Rahmenstege, des wenigstens einen Elementrahmens aufweisen.

Ferner wird die Aufgabe bei dem Elementrahmen erfindungsgemäß dadurch gelöst, dass der Elementrahmen wenigstens eine Dichtungs-Abstützvorrichtung aufweist. An der wenigstens einen Dichtungs-Abstützvorrichtung kann sich wenigstens eine Dichtung des Filterelements kraftübertragend abstützen.

Vorteilhafterweise kann die wenigstens eine Dichtungs-Abstützvorrichtung wenigstens eine dichtungszugewandte elementseitige Abstützfläche aufweisen.

Vorteilhafterweise kann sich die wenigstens eine dichtungszugewandte elementseitige Abstützfläche auf einer Dichtungsrückseite der wenigstens einen Dichtung befinden oder angeordnet werden, welche einer bezüglich der Elementachse axialen Dichtungsfläche der wenigstens einen Dichtung bezüglich der Elementachse axial abgewandt ist. Auf diese Weise kann die wenigstens eine Dichtung auf ihrer Dichtungsrückseite abgestützt werden.

Vorteilhafterweise kann der Elementrahmen wenigstens einen Teil einer Fixiereinrichtung aufweisen zum Zusammenwirken mit wenigstens einem Teil der Fixiereinrichtung aufseiten wenigstens eines Filterbalgs. Mit der wenigstens einen Fixiereinrichtung kann wenigstens ein Filterbalg mithilfe des wenigstens einen Elementrahmens in der korrekten Einbauposition gehalten werden.

In einer Ausführungsform kann an wenigstens einer Außenseite des Filterbalgs wenigstens eine Dichtungs-Abstützvorrichtung angeordnet sein, welche wenigstens eine dichtungszugewandte elementseitige Abstützfläche aufweist, an der wenigstens eine Dichtung mit einer Dichtungsrückseite kraftübertragend anliegt, wobei sich die Dichtungsrückseite auf der einer axialen Dichtungsfläche bezüglich der Elementachse axial abgewandten Seite der wenigstens einen Dichtung befindet.

Vorteilhafterweise kann der Filterbalg wenigstens einen balgseitigen Teil wenigstens einer Fixiereinrichtung aufweisen zum Zusammenwirken mit wenigstens einem rahmenseitigen Teil der Fixiereinrichtung aufseiten des Elementrahmens.

Vorteilhafterweise kann wenigstens ein balgseitiger Teil wenigstens einer Fixiereinrichtung als Vorsprung zum Zusammenwirken mit einer entsprechenden Aufnahme als rahmenseitiger Teil der wenigstens einen Fixiereinrichtung realisiert sein oder umgekehrt. Entsprechend kann auf Seiten des Elementrahmens wenigstens eine Aufnahme und/oder wenigstens ein Vorsprung realisiert sein. Die Vorsprünge können mit den Aufnahmen jeweils eine Rastverbindung eingehen. Die Aufnahmen können als Nuten oder Vertiefungen realisiert sein. Die Vorsprünge können als erhöhte Bereiche realisiert sein.

Vorteilhafterweise kann wenigstens ein balgseitiger Teil und/oder wenigstens ein rahmenseitiger Teil wenigstens einer Fixiereinrichtung wenigstens teilweise elastisch sein. Auf diese Weise kann die Fixiereinrichtung einfacher, insbesondere mit einem geringeren Kraftaufwand, verbunden und gegebenenfalls getrennt werden. Dazu können die entsprechenden elastischen Teile elastisch verformt werden.

Vorteilhafterweise kann wenigstens ein Teil der Fixiereinrichtung mit einem Kantenschutz kombiniert, insbesondere einstückig mit diesem verbunden oder aus/mit diesem geformt, sein. Auf diese Weise kann ein Platzbedarf, ein Herstellungsaufwand und ein Materialaufwand zur Realisierung des Filterbalgs verringert werden.

In einer Ausführungsform kann bei dem Filtergehäuse vorgesehen sein, dass das Filtergehäuse wenigstens eine Anpressvorrichtung für eine Dichtungs-Abstützvorrichtung des wenigstens einen Filterelements aufweist. Mit der wenigstens einen Anpressvorrichtung kann eine Anpresskraft auf die wenigstens eine Dichtungs-Abstützvorrichtung ausgeübt werden. Mittels der wenigstens einen Dichtungs-Abstützvorrichtung kann wenigstens eine Dichtung des Filterelements gegen wenigstens eine Dichtfläche des Filtergehäuses gepresst werden. So kann eine Dichtwirkung verbessert werden.

Bei einer vorteilhaften Ausführungsform kann wenigstens eine Anpressvorrichtung wenigstens eine gehäuseseitige Anpressfläche aufweisen, die auf der der wenigstens einen Dichtfläche bzgl. der Gehäuseachse axial gegenüberliegenden Seite des Elementaufnahmeraums angeordnet sein. Auf diese Weise kann die Dichtungs-Abstützvorrichtung und damit das Filterelement auf der der Dichtfläche bezüglich der Hauptachse axial gegenüberliegenden Seite abgestützt werden.

Bei einer weiteren vorteilhaften Ausführungsform kann wenigstens eine gehäuseseitige Anpressfläche schräg zu der wenigstens einen Dichtfläche verlaufen. Auf diese Weise können Richtungskomponenten der beim Einbau wirkende Einbaukräfte senkrecht zu der wenigstens einen Dichtfläche zur Erhöhung der Dichtwirkung beitragen. Vorteilhafterweise kann wenigstens eine gehäuseseitige Anpressfläche unter dem gleichen oder einem ähnlichen Neigungswinkel wie eine entsprechende dichtungsabgewandte Abstützfläche der wenigstens einen Dichtungs-Abstützvorrichtung des Filterelements schräg zu der Dichtungsfläche der Dichtung verlaufen. Auf diese Weise kann die wenigstens eine Dichtungs-Abstützvorrichtung keilartig zwischen der wenigstens einen gehäuseseitigen Anpressfläche und der wenigstens einen Dichtung eingepresst werden. So kann die wenigstens eine Dichtung mit einer größeren Dichtkraft gegen die wenigstens eine gehäuseseitige Dichtfläche gepresst werden.

Bei einer weiteren vorteilhaften Ausführungsform kann sich wenigstens eine vordere gehäuseseitige Anpressfläche auf der bezüglich einer Einbaurichtung des Filterelements in den Gehäusekörper der wenigstens einen Einbauöffnung axial gegenüberliegenden Seite des Gehäusekörpers befinden. Auf diese Weise kann das wenigstens eine Filterelement auf bezüglich der Einbauachse axial gegenüberliegenden Seiten eingespannt werden. So kann eine gleichmäßigere Verbesserung der Dichtwirkung erreicht werden.

Bei einer weiteren vorteilhaften Ausführungsform kann wenigstens ein Gehäusedeckel wenigstens ein Anpressschwert mit wenigstens einer Anpressfläche aufweisen. Das wenigstens eine Anpressschwert kann bei eingebautem Filterelement in einen seitlichen Bereich zwischen der Außenseite des Filterelement und der Innenseite des Gehäusekörpers eingeführt werden. Mit dem wenigstens einen Anpressschwert kann wenigstens ein Filterelement mittels dem wenigstens einen Gehäusedeckel in dem Filtergehäuse verspannt werden.

Vorteilhafterweise kann wenigstens ein Anpressschwert wenigstens eine dichtungszugewandte deckelseitige Anpressfläche und/oder wenigstens eine dichtungsabgewandte deckelseitige Anpressfläche aufweisen. Mit wenigstens einer dichtungszugewandten deckelseitigen Anpressfläche kann das wenigstens eine Anpressschwert gegen eine entsprechende dichtungsabgewandte elementseitige Abstützfläche einer Dichtungs-Abstützvorrichtung drücken. Mit wenigstens einer dichtungsabgewandten deckelseitigen Anpressfläche kann sich das wenigstens eine Anpressschwert gegen eine entsprechende einer der Einbauöffnung zugewandten hinteren gehäuseseitigen Anpressfläche des Gehäusekörpers abstützen. Beim Vorhandensein sowohl wenigstens einer dichtungszugewandten deckelseitigen Anpressfläche als auch wenigstens einer dichtungsabgewandten deckelseitigen Anpressfläche kann das wenigstens eine Anpressschwert zwischen der entsprechenden dichtungsabgewandten elementseitigen Abstützfläche und der hinteren gehäuseseitigen Anpressfläche eingespannt werden. So kann eine Verbindung, insbesondere ein Schwenkverbindung, zwischen dem wenigstens einen Gehäusedeckel und dem Gehäusekörper mechanisch entlastet werden. Insgesamt kann erfindungsgemäß das wenigstens eine Filterelement mit der Unterstützung des Gehäusedeckels mit dem wenigstens einen Anpressschwert mit einem geringeren Kraftaufwand in dem Gehäuse verspannt und mittels der wenigstens einen Dichtung abgedichtet werden.

Vorteilhafterweise kann wenigstens eine dichtungszugewandte deckelseitige Anpressfläche einen zu wenigstens einer dichtungsabgewandten elementseitigen Abstützfläche wenigstens einer Dichtungs-Abstützvorrichtung wenigstens eines Filterelements komplementären Verlauf aufweisen. Auf diese Weise kann die wenigstens eine dichtungszugewandte deckelseitige Anpressfläche flächig an der wenigstens einen dichtungsabgewandten elementseitigen Abstützfläche anliegen.

Bei einer weiteren vorteilhaften Ausführungsform kann in geschlossenem Zustand des Gehäusedeckels wenigstens eine dichtungszugewandte deckelseitige Anpressfläche wenigstens abschnittsweise schräg zur Einbauachse und/oder wenigstens abschnittsweise parallel zur gehäuseseitigen Dichtfläche verlaufen. Auf diese Weise können Richtungskomponenten von beim Schließen, insbesondere Schwenken, des Gehäusedeckels aufgewendeten Schließkräften senkrecht zur gehäuseseitigen Dichtfläche geleitet werden. Dadurch kann die Dichtwirkung verbessert werden.

Vorteilhafterweise kann wenigstens eine dichtungsabgewandte deckelseitige Anpressfläche wenigstens eine Biegung oder wenigstens einen Knick aufweisen. Ein vorderer Abschnitt in Schließschwenkrichtung des Gehäusedeckels vor der wenigstens einen Biegung kann an einer hinteren gehäuseseitigen Anpressfläche entlang geführt werden. Mit einem hinteren Abschnitt hinter der wenigstens einen Biegung kann das Anpressschwert mit der hinteren gehäuseseitigen Anpressfläche gleichsam "verrasten".

Vorteilhafterweise kann der Gehäusedeckel auf gegenüberliegenden Längsseiten jeweils ein Anpressschwert aufweisen. Auf diese Weise kann das wenigstens eine Filterelement auf gegenüberliegenden Seiten jeweils mit einem Anpressschwert verspannt werden.

Vorteilhafterweise kann das Filtergehäuse wenigstens eine Herausfallschutzeinrichtung aufweisen, welche verhindern kann, dass das wenigstens eine Filterelement bei geöffneter Einbauöffnung aus dem Elementaufnahmeraum unkontrolliert herausfallen kann. Die wenigstens eine Herausfallschutzeinrichtung vereinfacht einen Wechsel des Filterelements bei einer Überkopfanordnung des Filtergehäuses. In der Überkopfanordnung ist die wenigstens eine Einbauöffnung nach räumlich unten gerichtet. Die Herausfallschutzeinrichtung verhindert, dass das wenigstens eine Filterelement beim Öffnen des Gehäusedeckels unkontrolliert nach unten herausfällt. Zum Entnehmen des wenigstens einen Filterelement muss bei geöffneten Gehäusedeckel die Herausfallschutzeinrichtung separat überwunden werden. Dadurch, dass die wenigstens eine Herausfallschutzeinrichtung am Filtergehäuse angeordnet ist, kann auf eine spezielle Herausfallschutzeinrichtung aufseiten des Filterelements verzichtet werden.

Vorteilhafterweise kann wenigstens eine Herausfallschutzeinrichtung wenigstens einen Vorsprung aufweisen, welcher eine lichte Weite der Einbauöffnung wenigstens in einer Richtung bzgl. einer entsprechend gerichteten lichten Weite des angrenzenden Bereichs des Elementaufnahmeraums verkleinert. Der besagte angrenzende Bereich des Elementaufnahmeraums kann vorteilhafterweise dessen breiteste Stelle sein. Dort kann vorteilhafterweise der breiteste Bereich des wenigstens einen Filterelements angeordnet sein. Der breiteste Bereich des wenigstens einen Filterelements kann den breitesten Bereich des Elementaufnahmeraums möglichst vollständig ausfüllen. Durch die Verringerung der lichten Weite der Einbauöffnung kann verhindert werden, dass das wenigstens eine Filterelement mit seinem breitesten Bereich durch die Einbauöffnung hindurchrutschen kann. Die wenigstens eine Herausfallschutzeinrichtung muss durch entsprechende Handhabung überwunden werden, um das wenigstens eine Filterelement vollständig entfernen zu können. Insbesondere kann die Überwindung der Herausfallschutzeinrichtung durch elastisches Verformen aufseiten des wenigstens einen Filterelement und/oder aufseiten des Filtergehäuses und/oder durch eine geeignete Verschiebung des Filterelements schräg oder quer zur Einbauachse bewirkt werden.

Vorteilhafterweise kann wenigstens eine Herausfallschutzeinrichtung wenigstens einen Vorsprung, insbesondere einen Steg, eine Rippe, einen Wulst und/oder einen Nippel, aufweisen, welcher in die Einbauöffnung ragt. Eine derartige Herausfallschutzeinrichtung kann einfach realisiert werden.

Vorteilhafterweise kann wenigstens ein Teil der Herausfallschutzeinrichtung in einem Bereich der Einbauöffnung angeordnet sein, welcher wenigstens einer Dichtfläche zugewandt ist, und/ oder wenigstens ein Teil der Herausfallschutzeinrichtung kann in einem Bereich der Einbauöffnung angeordnet sein, welcher der wenigstens einer Dichtfläche bzgl. der Gehäuseachse axial abgewandt ist. Falls das wenigstens eine Teil der Herausfallschutzeinrichtung aufseiten der wenigstens ein Dichtfläche angeordnet ist, kann es an wenigstens einer Dichtung des Filterelements angreifen.

Vorteilhafterweise kann eine Dichtlippe der der wenigstens einen Dichtung zum Überwinden der Herausfallschutzeinrichtung entsprechend insbesondere elastisch verformt, insbesondere komprimiert und/oder gebogen, werden.

Vorteilhafterweise kann eine lichte Weite der Einbauöffnung kleiner sein als eine entsprechende maximale Ausdehnung des wenigstens einen Filterelements in seinem breitesten Bereich in Richtung der Elementachse. Auf diese Weise kann eine wenigstens teilelastisch Dichtung des Filterelements zum Überwinden der Herausfallschutzeinrichtung verformt werden, so dass die entsprechenden maximale Ausdehnung des Filterelements dadurch verringert werden kann und kleiner ist als die lichte Weite der Einbauöffnung.

Vorteilhafterweise kann eine Verringerung der lichten Weite der Einbauöffnung im Vergleich bezüglich der lichten Weite des angrenzenden Bereich des Elementaufnahmeraums kleiner sein als eine maximale Komprimierbarkeit des Filterelements in seinem entsprechenden breitesten Bereich. Auf diese Weise kann die wenigstens eine Herausfallschutzeinrichtung durch entsprechende Verformung des Filterelementes erreicht werden. Vorteilhafterweise kann die Komprimierbarkeit durch die Komprimierbarkeit wenigstens einer Dichtung des Filterelements realisiert sein oder werden.

Vorteilhafterweise können bei eingebautem Filterelement die Gehäuseachse und die Elementachse parallel zueinander verlaufen oder zusammenfallen.

Vorteilhafterweise können die Einbauachsen des Filterelements und des Gehäuses zusammenfallen.

Vorteilhafterweise kann die Einbauachse und die Gehäuseachse beziehungsweise die Elementachse senkrecht oder schräg zueinander verlaufen.

Vorteilhafterweise kann wenigstens eine Dichtfläche wenigstens abschnittsweise schräg zur Einbauachse und/oder zur Gehäuseachse verlaufen.

Vorteilhafterweise können wenigstens eine Einlassöffnung und wenigstens eine Auslassöffnung bzgl. der Gehäuseachse, insbesondere der Hauptachse und/oder der Elementachse, auf axial gegenüberliegenden Seiten des Gehäusekörpers angeordnet sein. Auf diese Weise kann der Filter linear aufgebaut sein. Die entsprechenden Stufen des Filters, nämlich ein Vorabscheider, wenigstens ein als Hauptfilterelement wirkendes erfindungsgemäßes Filterelement und wenigstens einen Sekundärfilterelement können strömungstechnisch in einer Linie oder Reihe angeordnet sein. Derart linear aufgebaute Filter können als "Inline Filter" bezeichnet werden. Bei einem derart linear aufgebauten Filter kann die Haupt-Durchströmrichtung des Fluids in dem Filter im Wesentlichen parallel zur Hauptachse, insbesondere zur Elementachse und zur Gehäuseachse, verlaufen.

Vorteilhafterweise kann wenigstens eine Einbauöffnung für wenigstens ein Filterelement in einer Querseite des Gehäusekörpers angeordnet sein. Die wenigstens eine Einbauöffnung kann sich zwischen einer Stirnseite des Gehäusekörpers mit der wenigstens einen Einlassöffnung und einer Stirnseite mit der wenigstens einen Auslassöffnung erstrecken. Auf diese Weise können die wenigstens eine Einbauöffnung, die wenigstens eine Einlassöffnung und die wenigstens eine Auslassöffnung in unterschiedlichen Seiten des Gehäusekörpers realisiert sein.

Vorteilhafterweise kann wenigstens ein Gehäusedeckel mit wenigstens einer Schwenkeinrichtung, insbesondere einem Scharnier oder Gelenk, schwenkbar an den Gehäusekörper befestigt sein. Auf diese Weise kann der Gehäusedeckel mittels einer Schwenkbewegung auf die Einbauöffnung geschwenkt werden. Dabei kann das wenigstens eine Anpressschwert durch die Einbauöffnung in einen Zwischenraum zwischen einer Längsseite des wenigstens einen Filterelements und einer entsprechenden Längsseite des Filtergehäuses eingeschoben werden.

Vorteilhafterweise kann die wenigstens eine Schwenkeinrichtung trennbar sein, so dass der Gehäusedeckel von dem Gehäusekörper getrennt werden kann. Der Gehäusedeckel kann insbesondere an einem Scharnier des Gehäusekörpers eingehängt werden. Der Gehäusedeckel kann einen Hülsenabschnitt aufweisen, welcher auf einen Bolzenabschnitt des Gehäusekörpers aufgesteckt werden kann. Auf diese Weise kann ein einfaches Scharnier gebildet werden. Vorteilhafterweise kann der Hülsenabschnitt auf einer Umfangsseite offen sein. So kann der Hülsenabschnitt zum Verbinden der Schwenkverbindung bezüglich der Schwenkachse der wenigstens eine Schwenkeinrichtung in radialer Richtung auf den Bolzenabschnitt gesteckt werden. Der Hülsenabschnitt muss nicht in axialer Richtung aufgesteckt werden. Auf diese Weise kann ein zum Zusammenbau der der wenigstens eine Schwenkeinrichtung benötigter Raum verringert werden. Der Gehäusedeckel kann um eine Schwenkachse des Scharniers geschwenkt werden. Beim Schwenken kann das Filterelement mit dem Gehäusedeckel mit einer Richtungskomponente in Einbaurichtung und/oder einer Richtungskomponente axial, parallel oder schräg zur Gehäuseachse gedrückt werden. Die wenigstens eine Dichtung kann dabei mittels des Gehäusedeckels, insbesondere mit wenigstens einem Anpressschwert, gegen die wenigstens eine gehäuseseitige Dichtfläche gepresst werden. Durch das Drücken des Filterelements mittels dem wenigstens einen Gehäusedeckel weiter in den Elementinnenraum kann durch einen im Filtergehäuse eingebrachten keilförmige Anordnung, insbesondere wenigstens eine gehäuseseitige Anpressfläche, die wenigstens eine Dichtung auch in einem in Einbaurichtung betrachtet vorderen Bereich des Elementinnenraums gegen die gehäuseseitige Dichtfläche gepresst werden.

Vorteilhafterweise kann ein Betätigungsabschnitt an einem der Schwenkbefestigung des Gehäusedeckels am Gehäusekörper entfernten Bereich des Gehäusedeckels angeordnet sein. An/mit dem Betätigungsabschnitt kann der Gehäusedeckel insbesondere von Hand und/oder mittels einem Werkzeug oder einer Maschine geschwenkt wird. Dadurch können aufgrund des entsprechenden Hebelarms die Spannkräfte und Anpresskräfte zum Verspannen des wenigstens einen Filterelements im Filtergehäuse besser eingebracht werden.

Vorteilhafterweise kann der wenigstens eine Gehäusedeckel mittels einer Verschluss- und/oder Verriegelungseinrichtung, insbesondere wenigstens eines Spannverschlusses und/oder wenigstens einer Spange, in seiner Schließposition an dem Gehäusekörper fixiert werden. Auf diese Weise kann der Gehäusedeckel gegen selbsttätiges Öffnen gesichert werden.

Außerdem wird die Aufgabe bei dem Filter erfindungsgemäß dadurch gelöst, dass wenigstens ein Filterelement wenigstens eine Dichtungs-Abstützvorrichtung für wenigstens eine Dichtung aufweist und das Filtergehäuse wenigstens eine Anpressvorrichtung für eine Dichtungs-Abstützvorrichtung des wenigstens einen Filterelements aufweist.

Vorteilhafterweise kann wenigstens ein Filterelement wenigstens einen Elementrahmen aufweisen, in dem wenigstens ein Filterbalg angeordnet ist.

Vorteilhafterweise kann das Filtergehäuse wenigstens eine Herausfallschutzeinrichtung aufweisen, welche verhindern kann, dass das wenigstens eine Filterelement bei geöffneter Einbauöffnung aus dem Elementaufnahmeraum unkontrolliert herausfallen kann.
Vorteilhafterweise kann der Filter als Mehrstufenfilter, insbesondere zwei Stufen-Kompaktluftfilter, ausgestaltet sein. Vorteilhafterweise kann wenigstens ein Filterelement strömungstechnisch im Anschluss an wenigstens eine Partikelabscheideeinrichtung, insbesondere eine Zyklonanordnung, angeordnet sein. Die wenigstens eine Partikelabscheideeinrichtung kann Teil des Filters oder extern diesem insbesondere als Vorabscheider vorgeschaltet sein. Ein externer Vorabscheider kann außerhalb eines Motorraums angeordnet sein. Vorteilhafterweise können wenigstens eine Einlassöffnung, wenigstens ein Auslassöffnung und gegebenenfalls eine Partikelabscheideeinrichtung im Wesentlichen linear angeordnet sein. Auf diese Weise kann das Fluid dem Filter entsprechend im Wesentlichen entlang insbesondere der Gehäuseachse durchströmen.

Eine der Durchströmseiten des Filterbalgs kann eine Einströmseite für das Fluid, die andere Durchströmseite eine Ausströmseite realisieren. Das Fluid durchströmt den Filterbalg von der Einströmseite zur Ausströmseite. Die Durchströmseiten können jeweils als Durchströmfläche realisiert sein, wobei bei einem gefalteten Filterbalg die jeweiligen Faltkanten die entsprechende Durchströmfläche aufspannen.

Vorteilhafterweise kann das Filterelement ein so genanntes Flachfilterelement sein. Bei einem Flachfilterelement im Sinne der Erfindung ist das Filtermedium nicht zu einem Hohlkörper geschlossen. Das erfindungsgemäße Filterelement ist nicht ringförmig. Die Durchströmseiten liegen sich bezüglich der Elementachse axial gegenüber. Im Unterschied dazu ist bei einem Hohlfilterelement, insbesondere einem so genannten Rundfilterelement, das Filtermedium umfangsmäßig geschlossen und umgibt einen Innenraum. Das erfindungsgemäße Filterelement kann eben oder gebogen sein. Dabei kann eine Einströmseite und/oder eine Ausströmseite des Filterbalges für das Fluid eben, gebogen oder abgestuft sein. Das Filterelement kann auch kastenförmig sein. Der Filterbalg kann etwa die Form eines Polyeders aufweisen. Vorteilhafterweise kann der Filterbalg würfelförmig, quaderförmig, pyramidal, prismatisch, keilartig oder dergleichen sein. Dabei ist es nicht erforderlich, dass alle Seiten, insbesondere Umfangsseiten, des Filterbalges eben sind. Wenigstens eine Seite des Filterbalges kann auch wenigstens zum Teil gebogen, insbesondere parabolisch, und/oder gestuft verlaufen. Gegenüberliegende Seiten können parallel verlaufen. Alternativ oder zusätzlich können sie auch schräg oder in anderer Weise nicht parallel zueinander verlaufen. Vorteilhafterweise können die Anströmfläche und/oder die Abströmfläche jeweils wenigstens abschnittsweise senkrecht oder schräg zur Elementachse verlaufen. Vorteilhafterweise können die Anströmfläche und die Abströmfläche wenigstens abschnittsweise schräg zueinander und/oder wenigstens abschnittsweise parallel zueinander verlaufen.

Vorteilhafterweise kann wenigstens ein Filterbalg ein zickzackartig und/oder wellenartig geformtes Filtermedium aufweisen. Auf diese Weise kann die von dem Fluid zu durchströmende Oberfläche des Filtermediums im Verhältnis zur Raumausdehnung des Filterbalgs vergrößert werden. Vorteilhafterweise können Faltkanten des Filtermediums auf den gegenüberliegenden Durchströmseiten, insbesondere auf einer Einströmseite und/oder eine Ausströmseite, parallel verlaufen.

Vorteilhafterweise kann wenigstens ein Filterbalg verhältnismäßig tiefe Falten und/oder variable Faltenhöhen aufweisen. Als Faltenhöhe wird die Ausdehnung einer Falte des gefalteten Filtermediums zwischen einer einströmseitigen Faltkante und einer benachbarten ausströmseitigen Faltkante bezeichnet. Bei tiefen Falten ist die Faltenhöhe, also die Höhe des Filterbalgs im Bereich der entsprechenden Falte, größer als eine Breite und/oder eine Länge des Filterbalgs senkrecht oder quer zur Faltenhöhe.

Das Filtermedium kann Filterpapier, Filtervlies, Meltblown, Gewebe und/oder andersartiges zur Filtrierung von Fluid, insbesondere Luft, geeignetes Filtermaterial aufweisen. Vorteilhafterweise kann das Filtermedium flexibel, insbesondere faltbar oder biegbar, sein.

Der Filterbalg kann alternativ oder zusätzlich fluiddurchlässigen, insbesondere luftdurchlässigen, Filterschaum aufweisen.

Der Filterbalg kann wenigstens teilweise als massiver Block aus Filtermaterial, insbesondere Filterschaum, realisiert sein.

Die Erfindung kann bei Kraftfahrzeugen, Bau-/Landmaschinen, Kompressoren, Industriemotoren oder sonstigen Gerät mit Verbrennungsmotoren eingesetzt werden.

Fahrzeuge im Sinne der Erfindung können Landfahrzeuge, Wasserfahrzeuge und/oder Luftfahrzeuge sein.

Vorteilhafterweise kann das Kraftfahrzeug ein Personenkraftwagen, ein Lastkraftwagen, ein Kraftrad, ein Kraftomnibus, eine Zugmaschine, ein landwirtschaftliches Fahrzeug und/oder ein Baufahrzeug oder dergleichen sein.

Die Erfindung kann vorteilhafterweise Teil eines Luftansaugtrakts einer Brennkraftmaschine sein. Der Filter kann zur Reinigung von Verbrennungsluft dienen, welche der Brennkraftmaschine zugeführt wird. Die Erfindung ist jedoch nicht beschränkt auf einen Luftfilter eines Luftansaugtrakts einer Brennkraftmaschine eines Kraftfahrzeugs. Vielmehr kann sie auch bei andersartigen Luftsystemen von Kraftfahrzeugen oder anderen Maschinen, insbesondere Landmaschinen oder Baumaschinen, verwendet werden. Der Luftfilter kann auch außerhalb der Kraftfahrzeugtechnik, insbesondere bei Industriemotoren, eingesetzt werden.

Im Übrigen gelten die im Zusammenhang mit dem erfindungsgemäßen Filterelement, dem erfindungsgemäßen Elementrahmen, dem erfindungsgemäßen Filterbalg, dem erfindungsgemäßen Filtergehäuse und dem erfindungsgemäßen Filter und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Längsschnitt eines Luftfilters mit einem Filtergehäuse, in dem austauschbar ein Filterelement gemäß einem ersten Ausführungsbeispiel angeordnet ist;
- Figur 2: eine längsseitige Ansicht des Luftfilters aus Figur 1, wobei die in Blickrichtung fordere Längswand des Filtergehäuses teilweise aufgeschnitten ist;
- Figur 3: eine isometrische Darstellung des Luftfilters aus Figuren 1 und 2;
- Figur 4: eine isometrische Explosionsdarstellung des Luftfilters aus Figuren 1 bis 3;
- Figur 5 bis 9: den Luftfilter aus den Figuren 1 bis 4 in unterschiedlichen Einbauphasen des Filterelements;
- Figur 10: eine isometrische Darstellung des Filterelements des Luftfilters aus Figuren 1 bis 9 schräg auf die Einströmseite betrachtet;
- Figur 11: eine isometrische Darstellung des Luftfilters aus Figur 10 schräg auf die Ausströmseite betrachtet;
- Figur 12: eine isometrische Explosionsdarstellung des Luftfilters aus Figuren 10 und 11 bestehend aus einem Filterbalg und einem Elementrahmen;
- Figur 13: einen isometrischen Querschnitt des Filterelements aus Figuren 10 bis 12;
- Figur 14: eine Detailansicht des Querschnitts des Filterelement aus Figur 13 im Bereich der Einströmseite des Filterelements;
- Figur 15: eine isometrische Explosionsdarstellung der Querschnittsdarstellung des Filters aus Figur 13;
- Figur 16: eine isometrische Detailansicht der Einströmseite des Filterelements aus Figuren 10 bis 12;
- Figur 17: das Filtergehäuse des Luftfilters aus Figuren 1 bis 9 in einer Überkopfmontage;
- Figur 18: eine Detailansicht des Filtergehäuses aus Figur 17 im Bereich eines Herausfallschutzes für das Filterelement;
- Figur 19 bis 25: den Luftfilter aus Figuren 14 und 18 in Überkopfmontage und entsprechende Detailansichten in unterschiedlichen Ausbauphasen des Filterelements;
- Figur 26: eine isometrische Ansicht eines Filterelements gemäß einem zweiten Ausführungsbeispiel mit Blick schräg auf die Einströmseite;
- Figur 27: eine Seitenansicht des Filterelements aus Figur 26;
- Figur 28: eine isometrische Querschnittdarstellung des Filterelements aus Figuren 26 und 27 entlang der Schnittlinie XXVIII-XXVIII aus Figur 27.

In den Figuren sind gleiche Bauteile mit gleichen Bezugszeichen versehen.

### Ausführungsform(en) der Erfindung

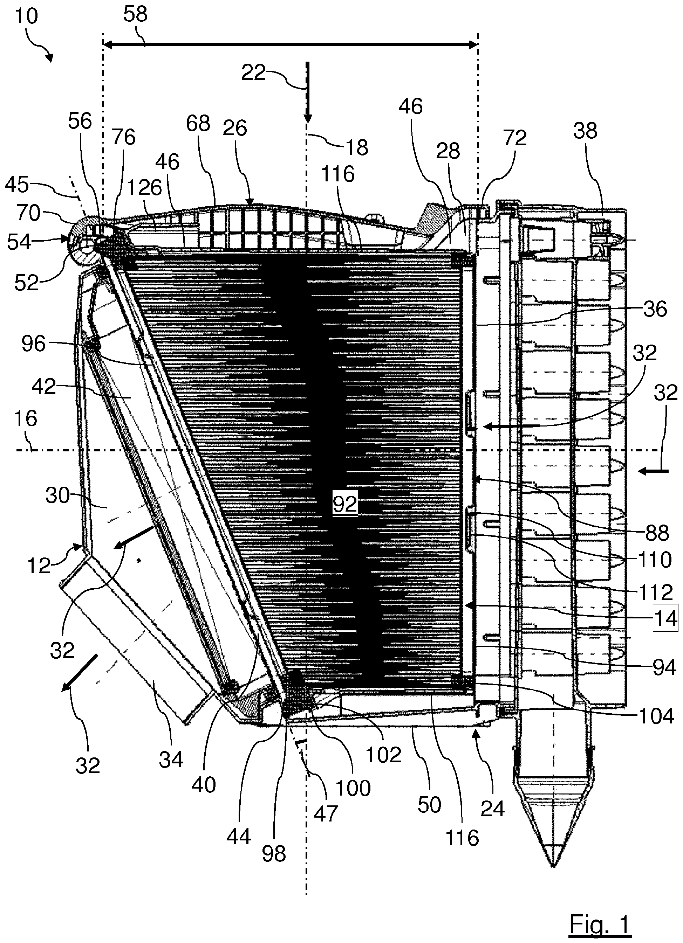

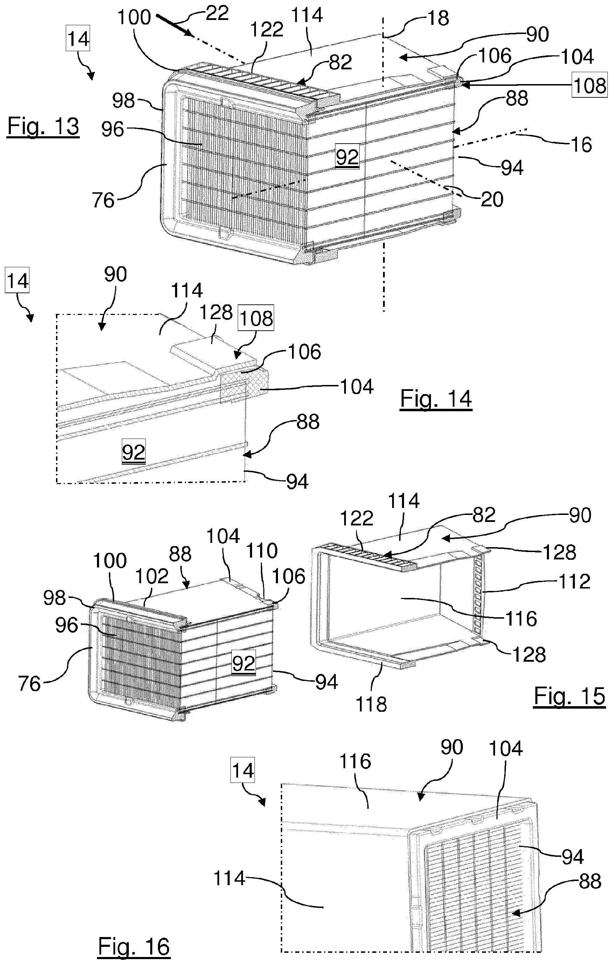

In Figuren 1 bis 25 ist ein Luftfilter 10 einer nicht gezeigten Brennkraftmaschine in unterschiedlichen Darstellungen, Schnitten, Detailansichten und Montagezuständen gezeigt. Der Luftfilter 10 ist in einem Ansaugtrakt für Verbrennungsluft der Brennkraftmaschine angeordnet. Er dient zur Reinigung der Verbrennungsluft, welche der Brennkraftmaschine zur Verbrennung zugeführt wird.

Der Luftfilter 10 weist ein öffenbares Filtergehäuse 12 auf, in dem austauschbar ein Filterelement 14 angeordnet ist.

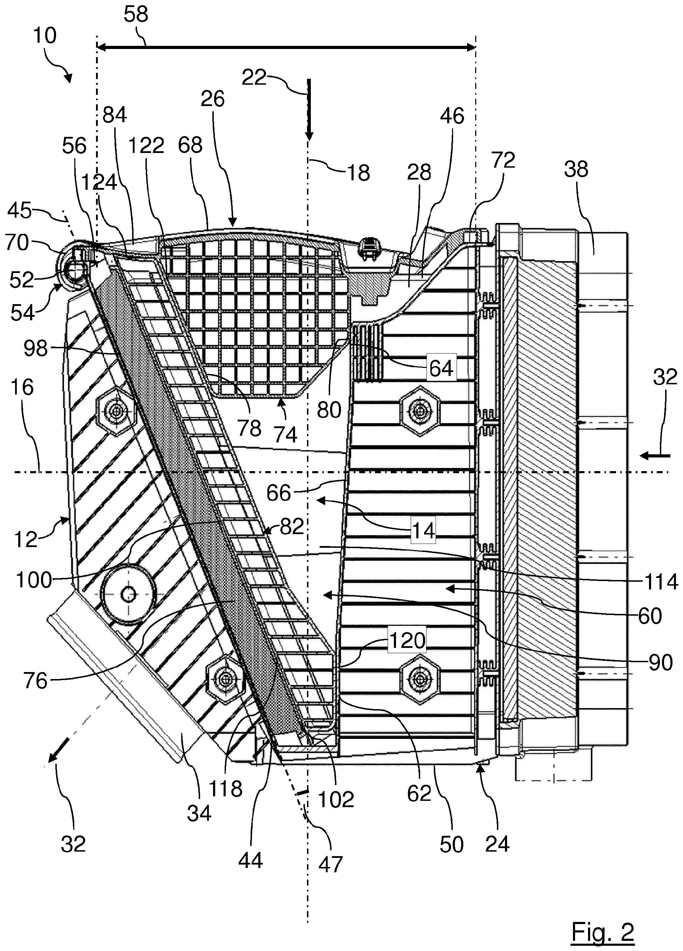

Zur Vereinfachung der Erklärung sind in einigen der Figuren eine gedachte Hauptachse 16, eine Einbauachse 18 und eine gedachte Querachse 20 dargestellt. Bei dem gezeigten Ausführungsbeispiel entsprechen die Achsen 16, 18 und 20 beispielhaft den Achsen eines rechtwinkligen Koordinatensystems. Die Hauptachse 16 spannt mit der Einbauachse 18 eine nicht weiter bezeichnete Längsmittelebene und mit der Querachse 20 eine ebenfalls nicht näher bezeichnete Quermittelebene auf. Die Einbauachse 18 spannt mit der Querachse 20 eine nicht näher bezeichnete Durchströmmittelebene auf. In den Figuren 1 und 2 verläuft die Längsmittelebene parallel zur Zeichenebene. Die Durchströmmittelebene und die Quermittelebene verlaufen senkrecht zueinander und senkrecht zur Längsmittelebene, in den Figuren ein und 2 ebenfalls senkrecht zur Zeichenebene. Eine Einbaurichtung des Filterelements 14 in das Filtergehäuse 12 ist durch einen Pfeil 22 dargestellt. Beispielhaft verläuft die Einbaurichtung 22 koaxial zur Einbauachse 18. Es versteht sich, dass einige der vorgenannten Achsen und einige der vorgenannten Ebenen bei anderen Ausführungsbeispielen der Erfindung auch schräg zueinander verlaufen können.

Im montierten Zustand des Luftfilters 10 fällt bei dem gezeigten Ausführungsbeispiel die Hauptachse 16 mit der Elementachse des Filterelements 14 und der Gehäuseachse des Filtergehäuses 12 zusammen. Der besseren Übersichtlichkeit wegen wird daher für die Elementachse und die Gehäuseachse je nach Darstellung das Bezugszeichen 16 verwendet. Es versteht sich, dass dabei jeweils die entsprechende Achse gemeint ist. Entsprechendes gilt für die Einbauachse 18.

Das Filtergehäuse 12 ist aus Kunststoff gefertigt. Das Filtergehäuse 12 umfasst einen Gehäusekörper 24 und einen Gehäusedeckel 26.

Der Gehäusekörper 24 verfügt über einen Elementaufnahmeraum 28 für das Filterelement 24. An den Elementaufnahmeraum 28 schließt sich bezüglich der Luftströmung durch den Luftfilter 10 stromabwärts ein Luftauslassraum 30 an. Die Luftströmung in den, durch den und aus dem Luftfilter 10 ist in den Figuren 1 bis 3 durch Pfeile 32 angedeutet.

An dem Luftauslassraum 30 schließt sich ein Auslassstutzen 34 an, an dem die Luftleitung des Ansaugtrakts angeschlossen ist. Auf der Lufteinlassseite verfügt der Aufnahmeraum 28 über eine Einlassöffnung 36. Die Einlassöffnung 36 erstreckt sich über die gesamte Einströmseite des Luftfilters 10. Sie erstreckt sich parallel zur Durchströmmittelebene. Stromaufwärts der Einlassöffnung 36 ist eine Zyklonanordnung 38 als Vorabscheider für Partikel aus der Luft angeordnet.

Auf seiner Ausströmseite weist der Elementaufnahmeraum 28 eine Auslassöffnung 40 auf. Die Auslassöffnung 40 erstreckt sich in einer Ebene parallel zur Querachse 20 und schräg zur Durchströmmittelebene, also schräg zur Ebene der Einlassöffnung 36.

Der Elementaufnahmeraum 28, die Auslassöffnung 40 und die Einlassöffnung 36 haben jeweils einen in Richtung der Hauptachse 16 betrachtet rechteckigen Querschnitt.

In dem Luftauslassraum 30 ist ein hier nicht weiter interessierendes Sekundärfilterelement 42 angeordnet. Das Sekundärfilterelement 42 deckt die Auslassöffnung 40 vollständig ab.

Die Auslassöffnung 40 ist von einer gehäuseseitigen Dichtfläche 44 umgeben. Die gehäuseseitige Dichtfläche 44 ist dem Elementaufnahmeraum 28 zugewandt. Sie ist bezüglich der Hautachse 16 umfangsmäßig zusammenhängend. Eine Dichtebene 45 der gehäuseseitigen Dichtfläche 44 erstreckt sich parallel zur Querachse 20 und schräg zur Durchströmmittelebene um einen Winkel 47 von etwa 20°.

Die Querseiten des Gehäuseköpers 24 und des Filterelements 14 verlaufen bei dem Ausführungsbeispiel auf gegenüberliegenden Seiten der Quermittelebene. Entsprechend verlaufen Längsseiten des Gehäusegrundkörpers 24 des Filterelements 14 auf gegenüberliegenden Seiten der Längsmittelebene. Die Längsseiten des Gehäusekörpers 24 und des Filterelements 14 erstrecken sich jeweils zwischen den entsprechenden Querseiten und der Einströmseite und der Ausströmseite.

An den Längsseiten verfügt der Gehäusekörper 24 über geschlossene Längswände 48. In Figuren 2, 5 bis 9 und 17 bis 25 ist die jeweils vordere Längswand 48 des Gehäusekörpers 24 wenigstens teilweise aufgeschnitten, um einen Blick in das Innere des Filtergehäuses 12 zu freizugeben.

Auf einer bezüglich der Einbaurichtung 22 hinteren Querseite weist der Gehäusekörper 24 eine Einbauöffnung 46 für das Filterelement 14 auf. Auf der bezüglich der Einbauachse 18 axial gegenüberliegenden Querseite weist der Gehäusekörper 24 eine geschlossene Querwand 50 auf.

Die Einbauöffnung 46 hat in Einbaurichtung 22 betrachtet einen etwa rechteckigen Querschnitt. Der Elementaufnahmeraum 28 verjüngt sich in Einbaurichtung 22 von der Einbauöffnung 46 zur gegenüberliegenden Querwand 50 betrachtet in seiner Ausdehnung bezüglich der Hauptachse 16. In Richtung der Querachse 20 betrachtet hat der Elementaufnahmeraum 28 etwa die Form eines rechtwinkligen Trapezes, wobei der schräge Schenkel des Trapezes der Auslassöffnung 40 zugewandt ist.

An der Außenseite des Gehäusekörpers 24 ist neben der Einbauöffnung 46 ein Bolzenabschnitt 52 einer scharnierartigen Schwenkverbindung 54 angeordnet. Die Schwenkverbindung 54 dient der Verbindung des Gehäusedeckels 26 mit dem Gehäusedeckel 24. Der Bolzenabschnitt 52 befindet sich auf der der Ausströmseite des Gehäusekörpers 24 zugewandten Seite der Einbauöffnung 26. der Bolzenabschnitt 52 und damit die Schwenkachse der Schwenkverbindung 54 erstrecken sich parallel zur Querachse 20.

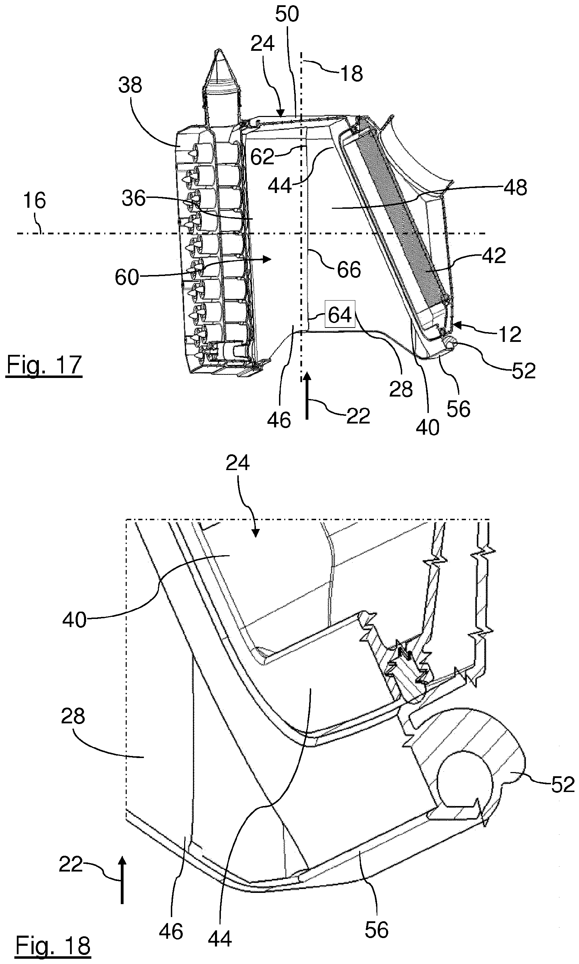

Neben dem Bolzenabschnitt 52 befindet sich eine Herausfallschutzeinrichtung 56 für das Filterelement 14. Die Herausfallschutzeinrichtung 56 ist insbesondere in Figur 18 im Detail erkennbar. Die Herausfallschutzeinrichtung 56 ist als Steg realisiert, welcher als Vorsprung in die Einbauöffnung 46 ragt. Die Herausfallschutzeinrichtung 56 erstreckt sich etwa parallel zur Quermittelebene über die gesamte Breite der Einbauöffnung 46 in Richtung der Querachse. Die Herausfallschutzeinrichtung 56 verkleinert eine lichte Weite 58 der Einbauöffnung 46 in Richtung der Hauptachse 16 verglichen zu dem angrenzenden Bereich des Elementaufnahmeraums 28.

Ferner weist der Gehäusekörper 24 zwei Anpressvorrichtungen 60 auf. Die Anpressvorrichtungen 60 befinden sich auf bezüglich der Querachse 20 axial gegenüberliegenden Innenseiten der Längswände 48. Die Anpressvorrichtungen 60 sind bezüglich der Längsmittelebene spiegelsymmetrisch, so dass im Weiteren beispielhaft lediglich eine der beiden Anpressvorrichtungen 60 beschrieben wird.

Die Anpressvorrichtung 60 ist als Vorsprung realisiert, welcher sich an der entsprechenden Längswand 48 bezüglich der Querachse 20 nach axial innen erhebt. Die Anpressvorrichtung 60 verfügt über eine in Einbaurichtung 22 betrachtet vordere gehäuseseitige Anpressfläche 62 und eine hintere gehäuseseitige Anpressfläche 64. Die hintere gehäuseseitige Anpressfläche 64 befindet sich in der Nähe der Einbauöffnung 46. Die vordere gehäuseseitige Anpressfläche 62 ist in der Nähe der Querwand 50 angeordnet.
Zwischen der vorderen gehäuseseitigen Anpressfläche 62 und der hinteren gehäuseseitigen Anpressfläche 64 erstreckt sich eine gehäuseseitige Führungsfläche 66.

Die Anpressflächen 62 und 64 sowie die Führungsfläche 66 sind der gehäuseseitigen Dichtfläche 44 zugewandt. Die gehäuseseitigen Anpressflächen 62 und 64 und die gehäuseseitige Führungsfläche 66 erstrecken sich jeweils mit einer Richtungskomponente parallel zur Querachse 20. Die vordere gehäuseseitige Anpressfläche 62 und die hintere gehäuseseitige Anpressfläche 64 verlaufen jeweils mit der dazu senkrechten Richtungskomponente etwa parallel zur Durchströmmittelebene, also parallel zu Einbauachse 18. Die vordere gehäuseseitige Anpressfläche 62 und die hintere gehäuseseitige Anpressfläche 64 sind jeweils etwa unter dem gleichen Winkel wie der Winkel 47, also um von etwa 20°, zur Dichtebene 45 geneigt.

Die hintere gehäuseseitige Anpressfläche 64 befindet sich in Richtung der Hauptachse 16 betrachtet in einem größeren Abstand von der Durchströmmittelebene und der Einbauachse 18 als die vordere gehäuseseitige Anpressfläche 62. Die gehäuseseitige Führungsfläche 66 erstreckt sich entsprechend schräg zur Durchströmmittelebene.

Der Gehäusedeckel 26 umfasst einen Verschlussabschnitt 68, welcher die Querseite des Gehäusedeckels 26 bildet. Ein bezüglich der Einbauachse 18 umlaufende Rand des Verschlussabschnitts 68 verläuft komplementär zu einem entsprechenden die Einlassöffnung 36 des Gehäusekörpers 24 umgebenden Rand. Der Verschlussabschnitt 68 liegt in der Schließposition des Gehäusedeckels 26 dicht auf der Einlassöffnung 36 an und verschließt diese.

Auf der der Ausströmseite des Filtergehäuses 12 zugewandten Seite verfügt der Gehäusedeckel 26 über einen Hülsenabschnitt 70, welcher den deckelseitigen Teil der Schwenkverbindung 54 bildet. Der Hülsenabschnitt 70 erstreckt sich parallel zur Querachse 20. Der Hülsenabschnitt 70 ist auf einer der Einlassseite des Filtergehäuses 12 zugewandten Umfangsseite offen, so dass der Hülsenabschnitt 70 zum Verbinden der Schwenkverbindung 54 in radialer Richtung auf den Bolzenabschnitt 52 gesteckt werden kann.

Auf der der Einströmseite des Filtergehäuses 12 zugewandten, dem Hülsenabschnitt 70 abgewandten Seite verfügt der Gehäusedeckel 26 über einen Betätigungsabschnitt 72. An dem Betätigungsabschnitt 72 kann der Gehäusedeckel 26 zum Schließen oder Öffnen betätigt werden.

Darüber hinaus verfügt der Gehäusedeckel 26 über zwei Anpressschwerter 74 zum Anpressen einer Dichtung 76 des Filterelements 14 gegen die gehäuseseitige Dichtfläche 44. Die Anpressschwerter 74 sind identisch und spiegelsymmetrisch zur Längsmittelebene angeordnet.

Im Folgenden wird beispielhaft eines der Anpressschwerter 74 beschrieben. Das Anpressschwert 74 erstreckt sich im Wesentlichen parallel zur Einbauachse 18 und zur Hauptachse 16, also parallel zur Längsmittelebene. Das Anpressschwert 74 geht innerhalb des Randes des Verschlussabschnitts 68 einstückig in Verschlussabschnitt 68 über. In eingebautem Zustand erstreckt sich das Anpressschwert 74 durch die Einbauöffnung 46 in den Elementaufnahmeraum 28. Dort befindet sich das Anpressschwert 74 zwischen der entsprechenden Längswand 48 des Gehäusekörpers 24 und der Außenseite des Filterelements 14 einerseits und zwischen der Dichtung 76 das Filterelement 14 und der Anpressvorrichtung 60 des Gehäusekörpers 24 andererseits.

Das Anpressschwert 74 verfügt über eine dichtungszugewandte deckelseitige Anpressfläche 78. Die dichtungszugewandte deckelseitige Anpressfläche 78 befindet sich auf der dem Hülsenabschnitt 70 der Schwenkverbindung 54 zugewandten Seite des Anpressschwertes 74. Die dichtungszugewandte deckelseitige Anpressfläche 78 ist im Schließzustand des Gehäusedeckels 26 der gehäuseseitigen Dichtfläche 44 und der Dichtung 76 zugewandt. Sie verläuft dann parallel zur Querachse 20 und schräg zur Einbauachse 18 unter einem Winkel, welcher dem Winkel 47 von etwa 20° entspricht. Die gehäuseseitige Dichtfläche 44 und die dichtungszugewandte deckelseitige Anpressfläche 78 verlaufen im geschlossenen Zustand des Gehäusedeckels 26 parallel zueinander. Die dichtungszugewandte deckelseitige Anpressfläche 78 befindet sich in geschlossenem Zustand in einem Abstand zu der gehäuseseitigen Dichtfläche 44, welcher einer entsprechenden Ausdehnung der Dichtung 76 und einer Dichtungs-Abstützvorrichtung 82 des Filterelements 14 dort entspricht.

Auf der der dichtungszugewandten deckelseitigen Anpressfläche 78 gegenüberliegenden Seite verfügt das Anpressschwert 74 über eine dichtungsabgewandte deckelseitige Anpressfläche 80. Die dichtungsabgewandte deckelseitige Anpressfläche 80 ist im Schließzustand des Gehäusedeckels 26 der Einströmseite des Filtergehäuses zugewandt. Ein dem Verschlussabschnitt 68 zugewandter, hinteren Abschnitt der dichtungsabgewandten deckelseitigen Anpressfläche 80 verläuft dann etwa parallel zur Einbauachse 18 und parallel zur Querachse 20. Dieser Abschnitt sich dann flächig an der hinteren gehäuseseitigen Anpressfläche 64 des Gehäusekörpers 24 ab. Nach einem Knick geht der hintere Abschnitt der dichtungsabgewandten deckelseitigen Anpressfläche 80 einstückig in einen vorderen Abschnitt über. Der vordere Abschnitt der dichtungsabgewandten deckelseitigen Anpressfläche 80 erstreckt sich etwa tangential zu der Schwenkachse der Schwenkverbindung 54.

Zwischen dem Hülsenabschnitt 70 und den Anpressschwertern 74 sind an dem Verschlussabschnitt 68auf bezüglich der Querachse 20 axial gegenüberliegenden Seiten zwei Andrückabschnitte 84 angeordnet.

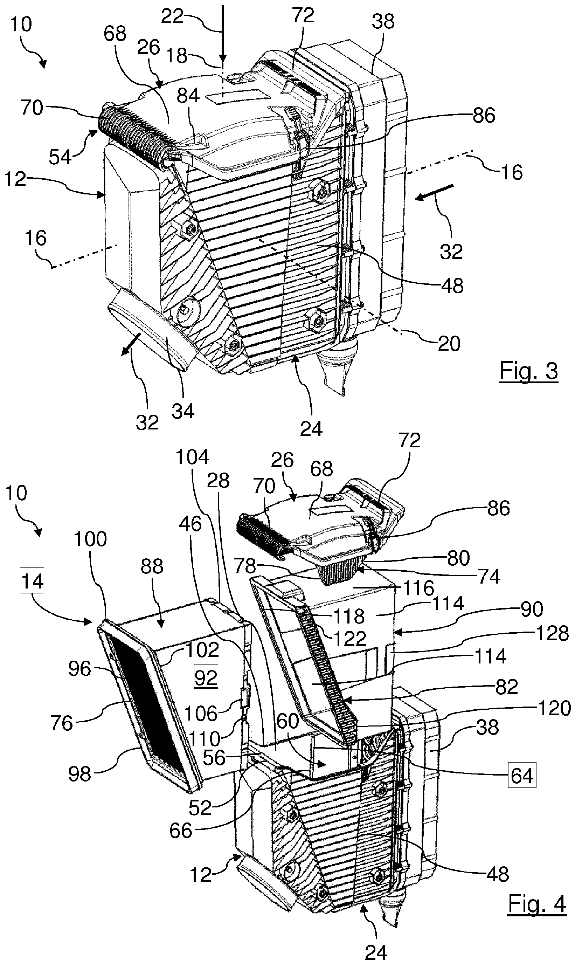

Der Gehäusedeckel 26 ist in seiner Schließposition, wie in der Figur 3 gezeigt, mit zwei Spannverschlüssen 86 auf bezüglich der Querachse 20 axial gegenüberliegenden Seiten an dem Gehäusekörper 24 fixiert. Die Spannverschlüsse 86 befinden sich bezüglich ihrer Hebelwirkung günstig im Bereich des Betätigungsabschnitts 72 auf der der Schwenkverbindung 54 abgewandten Seite.

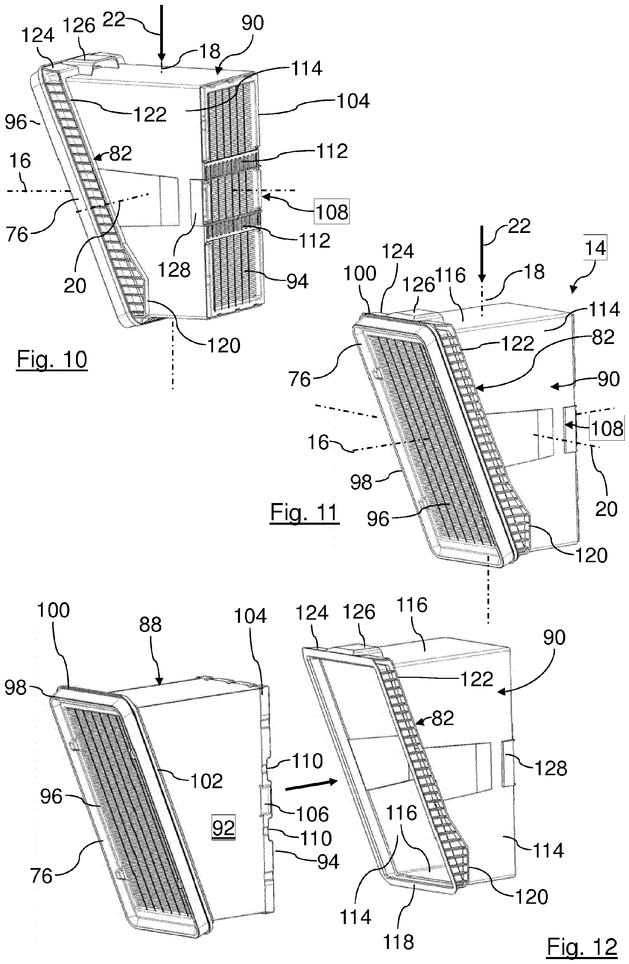

Das Filterelement 14 umfasst einen Filterbalg 88, welcher in einem Elementrahmen 90 eingesteckt ist. Das Filterelement 14 wird im Folgenden anhand der Figuren 10 bis 12 näher beschrieben.

Der Filterbalg 88 verfügt über ein zickzackförmig gefaltetes Filtermedium 92. Der Filterbalg 88 ist in Richtung der Hauptachse 16 betrachtet rechteckig. In Richtung der Querachse 20 betrachtet hat der Filterbalg 88 etwa die Form eines rechtwinkligen Trapezes. Eine Einströmseite 94 des Filterbalgs 88 verläuft parallel zur Durchströmmittelebene, also senkrecht zur Hauptachse 16. Eine Ausströmseite 96 verläuft parallel zur Querachse 20 und schräg zur Durchströmmittelebene, also schräg zur Einströmseite 94.

Der Filterbalg 88 verjüngt sich in Einbaurichtung 22 betrachtet zu seiner vorderen Querseite hin. Die Faltkanten des Filtermediums 92 an der Einströmseite 94 und der Ausströmseite 96 verlaufen jeweils parallel zur Querachse 20. Die Faltkanten spannen jeweils die auf der Einströmseite 94 bzw. die Abströmfläche auf der Ausströmseite 96 auf. Die Höhen der Falten des gefalteten Filtermediums 92 in Richtung der Hauptachse 16 verkleinert sich von der bezüglich der Einbaurichtung 22 hinteren Querseite des Filterbalgs 88 zu dessen vorderer Querseite hin. Der Filterbalg 18 hat also variable Faltenhöhen.

Die Ausströmseite 96 ist von der Dichtung 76 umgeben. Die Dichtung 76 ist aus Polyurethan. Sie ist elastisch. Die Dichtung 76 ist an der Stirnseite des Filtermediums 92 angeschäumt. Die Dichtung 76 überragt das Filtermedium 92 bezüglich der Hauptachse 16 radial außen und in axialer Richtung. Eine ausströmseitige stirnseitige Dichtlippe der Dichtung 76 bildet eine bezüglich der Hauptachse 16 umfangsmäßig zusammenhängende Dichtungsfläche 98. Die Dichtungsfläche 98 liegt im eingebauten Zustand an der gehäuseseitigen Dichtfläche 44 an.

Auf der der Dichtungsfläche 98 bezüglich der Hauptachse 16 axial abgewandten Rückseite der Dichtung 76 ist ein Verstärkungsrahmen 100 aus Kunststoff in die Dichtungsspur der Dichtung 76 eingebettet. Der Verstärkungsrahmen 100 erstreckt sich parallel zur Dichtebene 44 und parallel zur Dichtungsfläche 98. Der Verstärkungsrahmen 100 ist bezüglich der Hauptachse 16 umfangsmäßig zusammenhängend. Eine der Dichtungsfläche 98 bezüglich der Hauptachse 16 axial abgewandte Dichtungsrückseite 102 der Dichtung 76 erstreckt sich in einer Ebene parallel zur Ebene der Dichtungsfläche 98. Bei eingebautem Filterelement 14 erstrecken sich die jeweiligen Ebenen der Dichtungsfläche 98 und der Dichtungsrückseite 102 parallel zur Dichtebene 45 der gehäuseseitigen Dichtfläche 44.

Auf der Einströmseite 94 des Filterbalgs 88 ist ferner ein Kantenschutz 104 befestigt. Der Kantenschutz 104 besteht aus Polyurethan und ist an das Filtermedium 92 angeschäumt. Der Kantenschutz 104 erstreckt sich entlang des einströmseitigen Randes des Filterbalgs 88 bezüglich der Hauptachse 16 umfangsmäßig zusammenhängend. Der Kantenschutz 104 überragt das Filtermedium 92 bezüglich der Hauptachse 16 in axialer Richtung.

An den Längsseiten des Filterbalgs 88 weist der Kantenschutz 104 etwa mittig jeweils eine Rastnase 106 auf. Die Rastnasen 106 sind Teile einer Rastverbindung 108 zwischen dem Filterbalg 88 und dem Elementrahmen 90. Die Rastnasen 106 sind jeweils einstückig aus dem Material des Kantenschutzes 104 gebildet. Die Rastnasen 106 sind also mit dem Kantenschutz 104 kombiniert. Die Rastnasen 106 erstrecken sich auf gegenüberliegenden Längsseiten des Filterbalgs 88 jeweils in Richtung der Querachse 20 nach außen und parallel zur Einbauachse 18.

In Richtung der Einbauachse 18 betrachtet vor und hinter jeder Rastnase 106 weist der Kantenschutz 104 jeweils zwei Aussparungen 110 auf. Die Aussparungen 110 dienen der Einlage jeweils eines Rahmenstegs 112 des Elementrahmens 90.

Der Elementrahmen 90 ist aus Kunststoff. Der Elementrahmen 90 verfügt über eine bezüglich der Hauptachse 16 umfangsmäßig einstückig zusammenhängende, rechtwinklige Umfangswand, welche aus jeweils zueinander parallelen Längswänden 114 und Querwänden 116 besteht. Auf der Einströmseite und der Ausströmseite ist der Elementrahmen 90 offen. Die äußere Form des Elementrahmens 90 entspricht ansonsten etwa der äußeren Form des Filterbalgs 88.

Auf der Ausströmseite verfügt der Elementrahmen 90 über die Dichtungs-Abstützvorrichtung 82. Die Dichtungs-Abstützvorrichtung 82 ist am ausströmseitigen Rand des Elementrahmens 90 angeordnet. Die Dichtungs-Abstützvorrichtung 82 erstreckt sich an der Außenseite des Filterelements 14 bezüglich der Hauptachse 16 umfangsmäßig zusammenhängend. Die Dichtungs-Abstützvorrichtung 82 ist einstückig mit den Längswänden 114 und den Querwänden 116 verbunden.

Jeweils ein Schenkel der Dichtungs-Abstützvorrichtung 82 erstreckt sich an den Außenseiten der Längswände 114. Die Schenkel der Dichtungs-Abstützvorrichtungen 82 sind in größerem Gestalt identisch und bezüglich der Längsmittelebene spiegelsymmetrisch angeordnet. Im Folgenden wird eine der Schenkel der Dichtungs-Abstützvorrichtungen 82 beispielhaft näher beschrieben.

Der Schenkel der Dichtungs-Abstützvorrichtung 82 bildet auf seiner der Ausströmseite zugewandten Stirnseite einen entsprechenden Abschnitt einer dichtungszugewandten elementseitigen Abstützfläche 118 auf. Die gesamte dichtungsseitige elementseitige Abstützfläche 118 erstreckt sich bezüglich der Hauptachse 16 umfangsmäßig zusammenhängend in einer Ebene. Die Ebene der dichtungszugewandten elementseitigen Abstützfläche 118 verläuft parallel zur Querachse 20 und schräg zur Durchströmmittelebene. Der Neigungswinkel der Ebene der dichtungszugewandten elementseitigen Abstützfläche 118 zur Durchströmmittelebene entspricht dem Neigungswinkel der Dichtungsrückseite 102 des Filterbalgs 88 zur Durchströmmittelebene. Beide Neigungswinkel entsprechen dem Winkel 47 der gehäuseseitigen Dichtebene 45 zur Durchströmmittelebene.

Darüber hinaus verfügt jeder Schenkel der Dichtungs-Abstützvorrichtung 82 über eine in Einbaurichtung 22 betrachtet vordere dichtungsabgewandte elementseitige Abstützfläche 120 und eine hintere dichtungsabgewandte elementseitige Abstützfläche 122. Die hintere dichtungsabgewandte elementseitige Abstützfläche 122 befindet sich neben der hinteren Querwand 116. Die vordere dichtungsabgewandte elementseitige Abstützfläche 120 findet sich neben der vorderen Querwand 116.

Die hintere dichtungsabgewandte elementseitige Abstützfläche 122 und die vordere dichtungsabgewandte Abstützfläche 120 sind jeweils der Einströmseite des Filterelements 14 zugewandt. Die hintere dichtungsabgewandte elementseitige Abstützfläche 120 verläuft parallel zur dichtungszugewandten elementseitigen Abstützfläche 118. Die vordere dichtungsabgewandte elementseitige Abstützfläche 120 verläuft unter einem Neigungswinkel zur dichtungszugewandten elementseitigen Abstützfläche 118, welcher dem Winkel 47 zwischen der Dichtebene 45 der gehäuseseitigen Dichtfläche 44 und der Durchströmmittelebene entspricht. Auf der bezüglich der Einbaurichtung 22 vorderen Seite bilden die dichtungszugewandte elementseitige Abstützfläche 118 und der jeweilige Abschnitt der vorderen dichtungsabgewandten Abstützfläche 120 in Richtung der Querachse 20 betrachtet eine Keilform dessen Spitze in Einbaurichtung 22 zeigt.

Die Dichtungs-Abstützvorrichtung 82 bildet im Bereich der hinteren Querwand 116 zwei Andrückstellen 124 für die jeweiligen Andrückabschnitte 84 des Gehäusedeckels 26.

In Bereich der hinteren Querwand 116 des Elementrahmens 90 ist ein Griff 126 vorgesehen. An dem Griff 126 kann das Filterelement 14 gefasst, getragen und aus dem Filtergehäuse 12 gezogen werden.

Im Bereich der Einströmseite weist jede Längswand 114 eine Rastaufnahme 128 der Rastverbindung 108 auf. Die Rastaufnahmen 128 befinden sich an den Innenseiten der Längswände. Die Rastaufnahmen 128 sind etwa Komplementär zu den Rastnasen 106 des Filterbalgs 88.

In Einbaurichtung 22 betrachtet vor und hinter den Rastaufnahmen 128 erstrecken sich die zwei Rahmenstege 112 parallel zur Querachse 20 zwischen den beiden Längswänden 114. Die Rahmenstege 112 befinden sich auf der Einströmseite 94 des Filterelements 14.

Die Ausdehnung des Filterelements 14 im Bereich der hinteren Querseite in Richtung der Hauptachse 16 ist größer als die lichte Weite 58 der Einbauöffnung 46 des Filtergehäuses 12.

Zur Montage wird der Filterbalg 88 mit seiner Einströmseite 94 voran in die Ausströmseite des Elementrahmens 90 eingesteckt. In der korrekten Einbauposition verrasten die balgseitigen Rastnasen 106 der Rastverbindung 108 mit den entsprechenden rahmenseitigen Rastaufnahmen 128. Der Kantenschutz 104 ragt durch die einströmseitige Öffnung des Elementrahmens 90 hindurch und überragt diesen bezüglich der Hauptachse 16 in axialer Richtung. Dabei verlaufen die Raststege 112 jeweils durch die entsprechenden Aussparungen 110 des Kantenschutzes 104. Die dichtungszugewandte elementseitige Abstützfläche 118 des Elementrahmens 90 liegt flächig an der Dichtungsrückseite 102 der Dichtung 76 an.

Mittels der Rastverbindung 108 wird der Filterbalg 88 in dem Elementrahmen 90 gehalten. Das Filterelement 14 kann so zum Ausklopfen des Filterbalgs 88 mit dem Kantenschutz 104 gegen eine harte Fläche geschlagen werden. Der Filterbalg 88 muss hierzu nicht aus dem Elementrahmen 90 entfernt werden.

Die Rastverbindung 108 kann getrennt werden, falls der Filterbalg 88 beispielsweise zu Wartungszwecken oder zum Austausch aus dem Elementrahmen 90 herausgezogen werden. Der Elementrahmen 90 kann dann mit einem neuen Filterbalg 88 wieder verwendet werden.

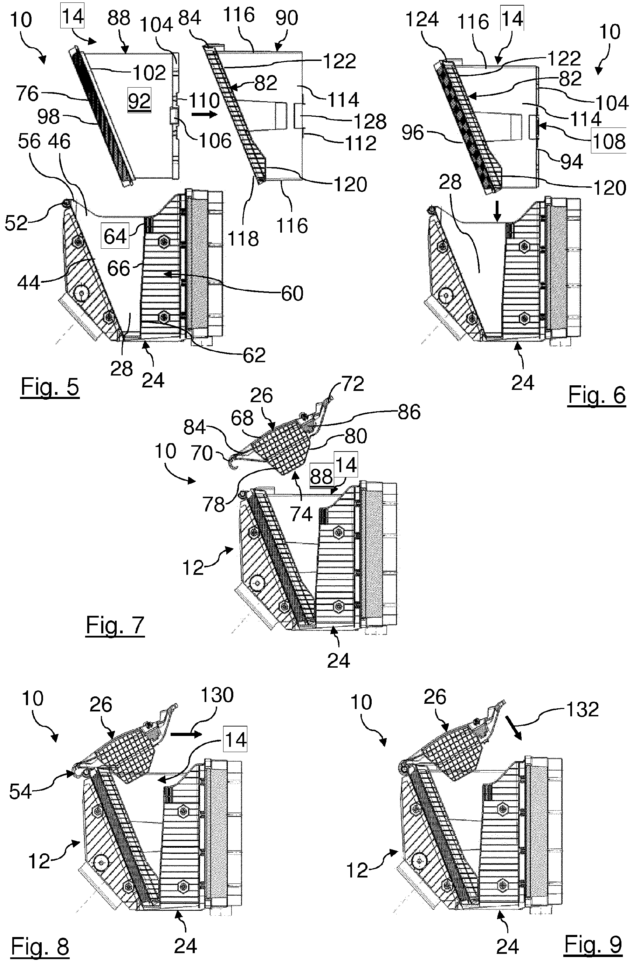

Der Zusammenbau des Luftfilters 10 wird im Folgenden anhand der Figuren 5 bis 9 näher erläutert. Das zusammengebaute Filterelement 14 wird, wie in Figur 6 gezeigt, mit der vorderen Querseite voran in Einbaurichtung 22 axial zur Einbauachse 18 durch die Einbauöffnung 46 in den Elementaufnahmeraum 28 des Gehäusekörpers 24 gesteckt.

Beim Einstecken des Filterelements 14 gleiten die vorderen dichtungsabgewandten Abstützflächen 120 der Dichtungs-Abstützvorrichtung 82 an der gehäuseseitigen Führungsfläche 66 der Anpressvorrichtungen 60 entlang und werden so in ihre Endposition geführt. Die keilartige Anordnung der Dichtungs-Abstützvorrichtung 82 mit der Dichtung 76 einerseits und die keilförmige Anordnung der gehäuseseitigen Dichtfläche 44 und der vorderen gehäuseseitigen Anpressfläche 62 andererseits bewirken, dass die Dichtung 76 mit beim Einbau mit zunehmenden Druck gegen die gehäuseseitige Dichtfläche 44 im vorderen Bereich gepresst wird.

Anschließend wird, wie in Figuren 7 und 8 gezeigt, der Hülsenabschnitt 70 des Gehäusedeckels 26 mit seiner offenen Längsseite auf den Bolzenabschnitt 52 des Gehäusekörpers 24 gesetzt. Der Gehäusedeckel 26 wird dabei so über die Einbauöffnung 46 gehalten, dass die Anpressschwerter 74 zum Teil durch die Einbauöffnung 46 ragen.

Der Gehäusedeckel 26 wird in Richtung der Hauptachse 16, in Figur 8 angedeutet durch einen Pfeil 130, zur Einströmseite geschoben. Dabei verbinden sich der Hülsenabschnitt 70 und der Bolzenabschnitt 52 zu der Schwenkverbindung 54.

Anschließend wird, wie in Figur 9 gezeigt, der Gehäusedeckel 26 um die Schwenkachse der Schwenkverbindung 54 zum Gehäusekörper 24 geschwenkt, was in der Figur 9 mit einem Pfeil 132 angedeutet ist.

Bei dem Einschwenken des Gehäusedeckels 26 gleiten zunächst die vorderen tangentiale Abschnitte der dichtungsabgewandten deckelseitigen Anpressflächen 80 der jeweiligen Anpressschwerter 74 an den entsprechenden hinteren gehäuseseitigen Anpressflächen 64 der gehäuseseitigen Anpressvorrichtungen 60 entlang. Nach überwinden der Knicke der dichtungsabgewandten deckelseitigen Anpressflächen 80 stützen sich in der Endposition, wie in der Figur 2 gezeigt, die hinteren, zur Einbauachse 18 parallelen Abschnitte der dichtungsabgewandten deckelseitigen Anpressflächen 80 kraftübertragend an den hinteren gehäuseseitigen Anpressflächen 64 jeweils ab.

Der geschlossene Gehäusedeckel 26 wird mit den Spannverschlüssen 86 an dem Gehäusekörper 24 fixiert. Durch das Spannen der Spannverschlüsse 86 wird der Gehäusedeckel 26 weiter gegen den Gehäusekörper 24 gepresst. Die Hebelwirkung bewirkt, dass die Anpressschwerter 74 verstärkt in den Raum zwischen den Anpressvorrichtungen 60 und den Dichtungs-Abstützvorrichtungen 82 gedrückt werden.

In der in Figur 2 gezeigten Endposition wird das Filterelement 14 über die Dichtungs-Abstützvorrichtung 82 mit Hilfe der Anpressschwerter 74 und der Anpressvorrichtungen 60 in dem Gehäusekörper 24 verspannt. Die dichtungszugewandten deckelseitigen Anpressflächen 78 liegen dabei flächig an den jeweiligen hinteren dichtungsabgewandten Abstützflächen 122 an. Die vorderen gehäuseseitigen Anpressflächen 62 die flächig an den entsprechenden vorderen dichtungsabgewandten Abstützflächen 120 der Dichtungs-Abstützvorrichtung 82 an. Sowohl auf der Seite Lufteinlassöffnung 36 als auch auf der Seite der Querwand 50 wird die Dichtung 76 mithilfe der Anpressschwerter 74, der Anpressvorrichtungen 60 und der Dichtungs-Abstützvorrichtung 82 gleichmäßig gegen die gehäuseseitigen Dichtfläche 44 gepresst. Die Dichtung 76 ist der Reinluftseite des Filterelements 14 zugewandt und dichte diese gegen die Rohluftseite ab. Der jeweils keilartige Aufbau der Anpressschwerter 74, des in Einbaurichtung 22 vorderen Bereichs der Dichtungs-Abstützvorrichtung 82 und der gehäuseseitigen Dichtfläche 44 im Verhältnis zu den Anpressvorrichtungen 60 ermöglicht dabei entsprechende Einbaukräfte in Einbaurichtung 22 zur Vergrößerung von Dichtkräften senkrecht zur Dichtebene 45 einzusetzen.

In den Figuren 17 bis 25 ist der Luftfilter 10 in einer Überkopfmontage gezeigt, bei der die Einbauöffnung 46 nach räumlich unten gerichtet ist.

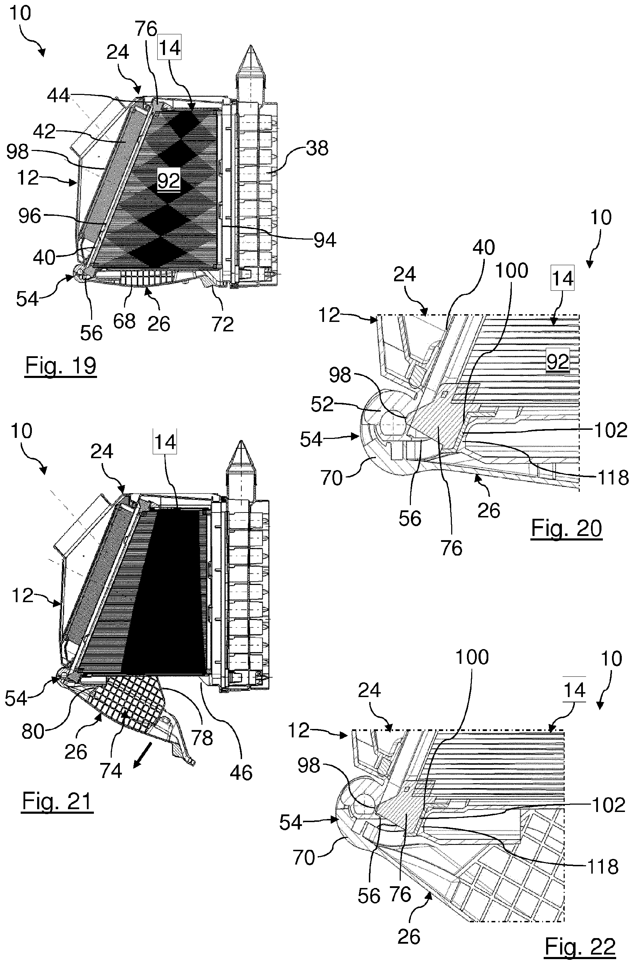

Zum Ausbau des Filterelements 14 in der Überkopfmontage werden zunächst die Spannverschlüsse 86 gelöst. Dann wird der Gehäusedeckel 26 um die Achse der Schwenkverbindung 54 nach unten geschwenkt, wie dies in den Figuren 21 und 22 gezeigt ist. Anschließend wird der Gehäusedeckel 26 von der Einlassseite des Filtergehäuses 12 weg in Richtung der Hauptachse 16 geschoben, so dass der Hülsenabschnitt 70 der Schwenkverbindung 70 von dem Bolzenabschnitt 52 getrennt wird. Der Gehäusedeckel 26 wird vollständig entfernt.

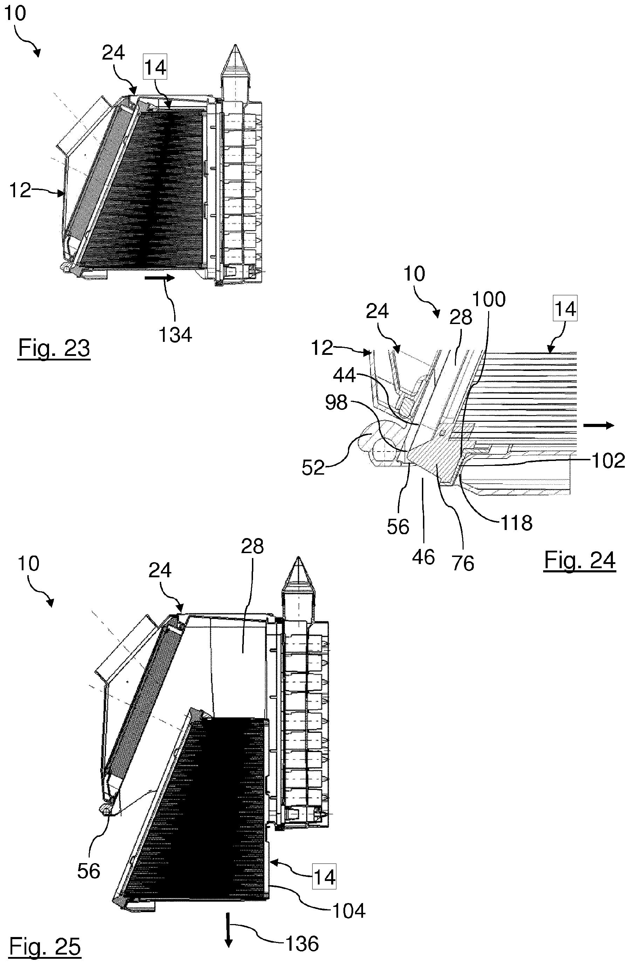

Die Herausfallschutzeinrichtung 56 des Gehäusekörpers 24 blockiert, wie in den Figuren 23 und 24 gezeigt, die Dichtungslippe der Dichtung 76. Die Herausfallschutzeinrichtung 56 verhindert, dass das Filterelement 14 unkontrolliert nach räumlich unten herausfallen aus dem Gehäusekörper 24 kann.

Um das Filterelement 14 aus dem Gehäusekörper 24 entnehmen zu können, muss dieses, wie in der Figur 23 angedeutet durch einen Pfeil 134, etwas zur Einströmseite des Luftfilters 10 hin geschoben, so dass der der Einbauöffnung 46 zugewandte Querabschnitt der Dichtung 76 unter einer leichten elastischen Verformung an der Herausfallschutzeinrichtung 56 vorbei bewegt werden kann. Das Filterelement 14 kann anschließend, wie in der Figur 25 gezeigt, nach räumlich unten, angedeutet durch einen Pfeil 136, aus dem Gehäusekörper 24 entnommen werden.

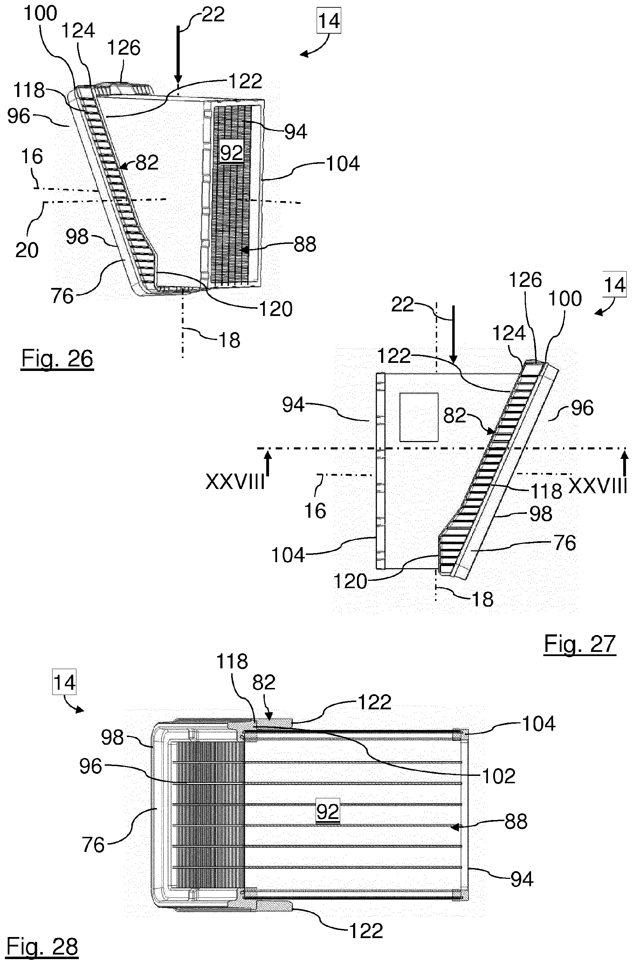

In Figuren 26 bis 28 ist ein Filterelement 14 gemäß einem zweiten Ausführungsbeispiel gezeigt. Diejenigen Elemente, die zu denen des ersten Ausführungsbeispiels aus Figuren 1 bis 25 ähnlich sind, sind mit denselben Bezugszeichen versehen. Das zweite Ausführungsbeispiel unterscheidet sich von dem ersten Ausführungsbeispiel dadurch, dass beim zweiten Ausführungsbeispiel aus Figuren 26 bis 28 die Dichtungs-Abstützvorrichtung 28 direkt an dem Filterbalg 88 befestigt ist. Bei dem zweiten Ausführungsbeispiel ist kein austauschbarer Elementrahmen vorgesehen. Das Filterelement 14 wird mit dem Filterbalg 88 und der Dichtungs-Abstützvorrichtung 82 gemeinsam vorgefertigt und ausgetauscht.

## Patentansprüche

1. Filterelement (14) eines Filters (10) für insbesondere gasförmiges Fluid, insbesondere Luft, insbesondere einer Brennkraftmaschine, insbesondere eines Kraftfahrzeugs und/oder einer Maschine, welches in einer Einbaurichtung (22), welche parallel oder koaxial zu einer Einbauachse (18) verläuft, in ein Filtergehäuse (12) des Filters (10) eingebaut werden kann, mit wenigstens einem Filterbalg (88) aufweisend wenigstens ein Filtermedium (92), wobei der wenigstens eine Filterbalg (88) auf bezüglich einer Elementachse (16), welche senkrecht oder quer zur Einbauachse (18) verläuft, axial gegenüberliegenden Seiten jeweils eine Durchströmseite (94, 96) für Fluid aufweist, wobei der wenigstens eine Filterbalg (88) jeweils eine bezüglich der Einbaurichtung (22) vordere und hintere Querseite aufweist, wobei die Querseiten sich bezüglich der Einbaurichtung (22) axial gegenüberliegen, wobei der wenigstens eine Filterbalg (88) zwei sich zwischen den Durchströmseiten (94, 96) und den Querseiten des Filterelements (14) auf gegenüberliegenden Seiten erstreckende Längsseiten aufweist, und mit wenigstens einer Dichtung (76), welche bzgl. der Elementachse (16) umfangsmäßig wenigstens teilweise zusammenhängend wenigstens abschnittsweise an einer bezüglich der Elementachse (16) radial äußeren Umfangsseite des Filterelements (14) angeordnet ist, **wobei** das Filterelement (14) an wenigstens einer Außenseite wenigstens eine Dichtungs-Abstützvorrichtung (82) aufweist, wobei die wenigstens eine Dichtungs-Abstützvorrichtung (82) an wenigstens einer Längsseite des Filterelements angeordnet ist, **dadurch gekennzeichnet, dass** wenigstens eine Dichtungs-Abstützvorrichtung (82) eine bezüglich der Einbaurichtung (22) vordere, im Bereich der vorderen Querseite angeordnete, dichtungsabgewandte elementseitige Abstützfläche (120) und wenigstens eine hintere, im Bereich der hinteren Querseite angeordnete, dichtungsabgewandte elementseitige Abstützfläche (122) aufweist, wobei die wenigstens eine vordere dichtungsabgewandte elementseitige Abstützfläche (120) und die wenigstens eine hintere dichtungsabgewandte elementseitige Abstützfläche (122) unter einem Winkel von zwischen etwa 10° und etwa 30°, insbesondere etwa 20°, zueinander geneigt sind und die wenigstens eine hintere dichtungsabgewandte elementseitige Abstützfläche (122) parallel zu wenigstens einer insbesondere hinteren dichtungszugewandten elementseitigen Abstützfläche (118) verläuft und wenigstens ein Teil der wenigstens einen dichtungszugewandten elementseitigen Abstützfläche (118) und wenigstens ein Teil der vorderen, dichtungsabgewandten elementseitigen Abstützfläche (120) eine keilartige Anordnung bilden, wobei eine Spitze der keilartigen Anordnung etwa in Einbaurichtung (22) zeigt.

2. Filterelement nach Anspruch 1, **dadurch gekennzeichnet, dass** wenigstens eine der wenigstens einen Dichtung (76) zugewandte elementseitige Abstützfläche (118) und wenigstens eine der wenigstens einen Dichtung (76) abgewandte elementseitige Abstützfläche (120, 122) wenigstens einer Dichtungs-Abstützvorrichtung (82) wenigstens abschnittsweise schräg zueinander verlaufen.

3. Filterelement nach Anspruch 1 oder 2, **dadurch gekennzeichnet, dass** wenigstens eine dichtungsabgewandte elementseitige Abstützfläche (120, 122) wenigstens abschnittsweise parallel oder schräg zu wenigstens einer Durchströmfläche (94, 96), insbesondere einer Durchströmebene, des Filterbalgs (88) und/oder parallel oder schräg zur Einbauachse (18) verlaufen.

4. Filterelement nach einem der vorigen Ansprüche, **dadurch gekennzeichnet, dass** wenigstens eine Dichtungs-Abstützvorrichtung (82) an einem sich wenigstens bezüglich der Elementachse (16) teilumfänglich erstreckenden Rahmen, insbesondere einem Elementrahmen (90) oder Stützrahmen, oder als ein derartiger realisiert sind.

5. Filterelement nach einem der vorigen Ansprüche, **dadurch gekennzeichnet, dass** wenigstens eine Dichtungs-Abstützvorrichtung (82) trennbar oder nicht zerstörungsfrei trennbar mit wenigstens einem Filterbalg (88) des Filterelements (14) verbunden ist.

6. Filterelement nach einem der vorigen Ansprüche, umfassend einen Elementrahmen (90), wobei der Elementrahmen (90) den Filterbalg (88) bzgl. einer Elementachse (16) wenigstens teilumfänglich umgibt, wobei die Elementachse (16) senkrecht oder quer zu einer Einbauachse (18) des Filterelements (14) in ein Filtergehäuse (12) verläuft, **wobei** der Elementrahmen (90) die Dichtungs-Abstützvorrichtung (82) aufweist.

7. Filterelement nach einem der vorigen Ansprüche, wobei die Dichtungs-Abstützvorrichtung (82) wenigstens eine dichtungszugewandte elementseitige Abstützfläche (118) aufweist, an der wenigstens eine Dichtung (76) mit einer Dichtungsrückseite (102) kraftübertragend anliegt, wobei sich die Dichtungsrückseite (102) auf der einen axialen Dichtungsfläche (98) bezüglich der Elementachse (16) axial abgewandten Seite der wenigstens einen Dichtung (76) befindet.

8. Filter (10) für insbesondere gasförmiges Fluid, insbesondere Luft, insbesondere einer Brennkraftmaschine, insbesondere eines Kraftfahrzeugs, mit wenigstens einem Filtergehäuse (12), in dem wenigstens ein Filterelement (14) nach einem der vorigen Ansprüche 1 -7 angeordnet ist, wobei das wenigstens eine Filtergehäuse (12) wenigstens eine Einlassöffnung (36) für zu reinigendes Fluid und wenigstens eine Auslassöffnung (40) für gereinigtes Fluid aufweist, wobei das Filterelement (14) in einem Elementaufnahmeraum (28) des wenigstens einen Filtergehäuses (12) so angeordnet ist, dass es die wenigstens eine Einlassöffnung (36) von der wenigstens einen Auslassöffnung (40) trennt, wobei das Filtergehäuse (12) einen Gehäusekörper (24) mit wenigstens einer Einbauöffnung (46) zu dem Elementaufnahmeraum (28) aufweist, durch die das wenigstens eine Filterelement (14) in einer Einbaurichtung (22), welche parallel oder koaxial zu einer Einbauachse (18) verläuft, in einen Elementaufnahmeraum (28) des Gehäusekörpers (24) eingebracht werden kann, und das wenigstens eine Filtergehäuse (12) wenigstens einen Gehäusedeckel (26) aufweist, mit dem die öffenbare Einbauöffnung (46) verschlossen werden kann, wobei die wenigstens eine Einbauöffnung (46) in einer bezüglich einer Gehäuseachse (16) seitlichen Querseite des Gehäusekörpers (24) angeordnet ist, und das wenigstens eine Filtergehäuse (12) wenigstens eine Dichtfläche (44) zur Anlage wenigstens einer Dichtung (76) des wenigstens eines Filterelements (14) aufweist, welche die Gehäuseachse (16) wenigstens teilumfänglich umgibt, **wobei** das Filtergehäuse (12) wenigstens eine Anpressvorrichtung (60) für eine Dichtungs-Abstützvorrichtung (82) des wenigstens einen Filterelements (14) aufweist.

9. Filter nach Anspruch 8, das Filtergehäuse mit wenigstens einer Einlassöffnung (36) für zu reinigendes Fluid und wenigstens einer Auslassöffnung (40) für gereinigtes Fluid, wobei das wenigstens eine Filterelement (14) in einem Elementaufnahmeraum (28) des Filtergehäuses (12) so angeordnet ist, dass es die wenigstens eine Einlassöffnung (36) von der wenigstens einen Auslassöffnung (40) trennt, wobei das Filtergehäuse (12) einen Gehäusekörper (24) mit wenigstens einer Einbauöffnung (46) zu dem Elementaufnahmeraum (28) aufweist, durch die das wenigstens eine Filterelement (14) in einer Einbaurichtung (22), welche parallel oder koaxial zu einer Einbauachse (18) verläuft, in einen Elementaufnahmeraum (28) des Gehäusekörpers (24) eingebracht ist, und das Filtergehäuse (12) wenigstens einen Gehäusedeckel (26) aufweist, mit dem die öffenbare Einbauöffnung (46) verschlossen werden kann, wobei die wenigstens eine Einbauöffnung (46) in einer bezüglich einer Gehäuseachse (16) seitlichen Querseite des Gehäusekörpers (24) angeordnet ist, und das Filtergehäuse (12) wenigstens eine Dichtfläche (44) zur Anlage wenigstens einer Dichtung (76) des wenigstens eines Filterelements (14) aufweist, welche die Gehäuseachse (16) wenigstens teilumfänglich umgibt, **wobei** das Filtergehäuse (12) wenigstens eine Anpressvorrichtung (60) für eine Dichtungs-Abstützvorrichtung (82) des wenigstens einen Filterelements (14) aufweist.

10. Filter nach Anspruch 8 oder 9, **dadurch gekennzeichnet, dass** wenigstens eine Anpressvorrichtung (60) wenigstens eine gehäuseseitige Anpressfläche (62, 64) aufweist, die auf der der wenigstens einen Dichtfläche (44) bezüglich der Gehäuseachse (16) axial gegenüberliegenden Seite des Elementaufnahmeraums (28) angeordnet ist.

11. Filter nach einem der Ansprüche 8 bis 10, **dadurch gekennzeichnet, dass** wenigstens eine gehäuseseitige Anpressfläche (62, 64) schräg zu der wenigstens einen Dichtfläche (44) verläuft.

12. Filter nach einem der Ansprüche 8 bis 11, **dadurch gekennzeichnet, dass** sich wenigstens eine vordere gehäuseseitige Anpressfläche (62) auf der bezüglich einer Einbaurichtung (22) des Filterelements (14) in den Gehäusekörper (24) der wenigstens einen Einbauöffnung (46) axial gegenüberliegenden Seite des Gehäusekörpers (24) befindet.

13. Filter nach einem der Ansprüche 8 bis 12, **dadurch gekennzeichnet, dass** wenigstens ein Gehäusedeckel (26) wenigstens ein Anpressschwert (74) mit wenigstens einer Anpressfläche (78) aufweist.

14. Filter nach einem der Ansprüche 8 bis 13, **dadurch gekennzeichnet, dass** in geschlossenem Zustand des Gehäusedeckels (26) wenigstens eine dichtungszugewandte deckelseitige Anpressfläche (78) wenigstens abschnittsweise schräg zur Einbauachse (18) und/oder wenigstens abschnittsweise parallel zur gehäuseseitigen Dichtfläche (44) verlaufen.

## Claims

1. Filter element (14) of a filter (10) for in particular gaseous fluids, in particular air, in particular of an internal combustion engine, in particular of a motor vehicle and/or of a machine, which filter element can be installed in a filter housing (12) of the filter (10) in a mounting direction (22) which extends parallel or coaxially to a mounting axis (18), with at least one filter bellows (88) featuring at least one filter medium (92), wherein the at least one filter bellows (88) features a through-flow side (94, 96) for the fluid on axially opposing sides with respect to an element axis (16) extending perpendicularly or transversely to the mounting axis (18), wherein the at least one filter bellows (88) features a front and a rear transverse side each with respect to the mounting direction (22), wherein the transverse sides are axially opposite with respect to the mounting direction (22), wherein the at least one filter bellows (88) features two longitudinal sides extending on opposite sides between the through-flow sides (94, 96) and the transverse sides of the filter element (14), and with at least one seal (76) which is disposed circumferentially at least partially coherently at least sectionwise with respect to the element axis (16) on a radially outer circumferential side of the filter element (14) with respect to the element axis (16), wherein the filter element (14) features at least one seal support apparatus (82) on at least one exterior side, wherein the at least one seal support apparatus (82) is disposed on at least one longitudinal side of the filter element, **characterized in that** at least one seal support apparatus (82) features an element-sided bearing surface (120) facing away from the seal, disposed in the area of the front transverse side with respect to the mounting direction (22) and at least one element-sided bearing surface (122) facing away from the seal, disposed in the area of the rear transverse side, wherein the at least one element-sided front bearing surface (120) facing away from the seal and the at least one element-sided rear bearing surface (122) facing away from the seal are inclined towards each other in an angle between approximately 10° and approximately 30°, in particular approximately 20° and the at least one element-sided rear bearing surface (122) facing away from the seal extends parallel to at least one in particular element-sided rear bearing surface (118) facing towards the seal and at least one part of the at least one element-sided bearing surface (118) facing towards the seal and at least one part of the element-sided front bearing surface (120) facing away from the seal form a wedge-like arrangement, wherein a tip of the wedge-like arrangement points approximately into the mounting direction (22).

2. Filter element according to claim 1, **characterized in that** at least one element-sided bearing surface (118) facing the at least one seal (76) and at least one element-sided bearing surface (120, 122) facing away from the at least one seal (76) of at least one seal support apparatus (82) extend at least sectionwise obliquely to one another.

3. Filter element according to claim 1 or 2, **characterized in that** at least one element-sided bearing surface (120, 122) facing away from the seal extends at least sectionwise parallel or obliquely to at least one flow-through area (94, 96), in particular to a flow-through level, of the filter bellows (88) and/or parallel or obliquely to the mounting axis (18).

4. Filter element according to one of the preceding claims, **characterized in that** at least one seal support apparatus (82) is realized on a frame extending at least partially circumferentially with respect to the element axis (16), in particular an element frame (90) or support frame, or is realized as such.

5. Filter element according to one of the preceding claims, **characterized in that** at least one seal support apparatus (82) is connected separably or non-destructively separably to at least one filter bellows (88) of the filter element (14).

6. Filter element according to one of the preceding claims, comprising an element frame (90), wherein the element frame (90) surrounds the filter bellows (88) at least partially circumferentially with respect to an element axis (16), wherein the element axis (16) extends perpendicularly or transversely to a mounting axis (18) of the filter element (14) into a filter housing (12), wherein the element frame (90) features the seal support apparatus (82).

7. Filter element according to one of the preceding claims, wherein the seal support apparatus (82) features at least one element-sided bearing surface (118) facing towards the seal and against which abuts at least one seal (76) with a seal rear side (102) in a force-transmitting manner, wherein the seal rear side (102) is located on the axial sealing surface (98) axially facing away from the at least one seal (76) with respect to the element axis (16).

8. Filter (10) for in particular gaseous fluids, in particular air, in particular of an internal combustion engine, in particular of a motor vehicle, with at least one filter housing (12), in which at least one filter element (14) according to one of the above claims 1 to 7 is disposed, wherein the at least one filter housing (12) features at least one inlet opening (36) for fluid to be cleaned and at least one outlet opening (40) for cleaned fluid, wherein the filter element (14) is disposed in an element receiving space (28) of the at least one filter housing (12) in such a way that it separates the at least one inlet opening (36) from the at least one outlet opening (40), wherein the filter housing (12) features a housing body (24) with at least one mounting opening (46) to the element receiving space (28), through which the at least one filter element (14) can be introduced in a mounting direction (22), which extends parallel or coaxially to a mounting axis (18), into an element receiving space (28) of the housing body (24), and the at least one filter housing (12) features at least one housing cover (26) allowing the openable mounting opening (46) to be closed, wherein the at least one mounting opening (46) is disposed, with respect to a housing axis (16), in a lateral transverse side of the housing body (24), and the at least one filter housing (12) features at least one sealing surface (44) for applying at least one seal (76) of the at least one filter element (14) which surrounds the housing axis (16) at least partially circumferentially, wherein the filter housing (12) features at least one pressing apparatus (60) for a seal support apparatus (82) of the at least one filter element (14).

9. Filter according to claim 8, the filter housing having at least one inlet opening (36) for fluid to be cleaned and at least one outlet opening (40) for cleaned fluid, wherein the at least one filter element (14) is disposed in an element receiving space (28) of the filter housing (12) in such a way that it separates the at least one inlet opening (36) from the at least one outlet opening (40), wherein the filter housing (12) features a housing body (24) with at least one mounting opening (46) to the element receiving space (28), through which the at least one filter element (14) is introduced in a mounting direction (22), which extends parallel or coaxially to a mounting axis (18), into an element receiving space (28) of the housing body (24), and the filter housing (12) features at least one housing cover (26) allowing the openable mounting opening (46) to be closed, wherein the at least one mounting opening (46) is disposed, with respect to a housing axis (16), in a lateral transverse side of the housing body (24), and the filter housing (12) features at least one sealing surface (44) for applying at least one seal (76) of the at least one filter element (14) which surrounds the housing axis (16) at least partially circumferentially, wherein the filter housing (12) features at least one pressing apparatus (60) for a seal support apparatus (82) of the at least one filter element (14).

10. Filter according to claim 8 or 9, **characterized in that** at least one pressing apparatus (60) features at least one housing-sided pressure surface (62, 64) which is disposed on the side of the element receiving space (28) axially opposing the at least one sealing surface (44) with respect to the housing axis (16).

11. Filter according to one of the claims 8 to 10, **characterized in that** at least one housing-sided pressure surface (62, 64) extends obliquely to the at least one sealing surface (44).

12. Filter according to one of the claims 8 to 11, **characterized in that** at least one front housing-sided pressure surface (62) is located on the side of the housing body (24) axially opposing the at least one mounting opening (46) with respect to a mounting direction (22) of the filter element (14) into the housing body (24).

13. Filter according to one of the claims 8 to 12, **characterized in that** at least one housing cover (26) features at least one pressure blade (74) with at least one pressure surface (78).

14. Filter according to one of the claims 8 to 13, **characterized in that,** in the closed state of the housing cover (26), at least one cover-sided pressure surface (78) facing towards the seal extends at least sectionwise obliquely to the mounting axis (18) and/or at least sectionwise parallel to the housing-sided sealing surface (44).

## Revendications

1. Élément filtrant (14) d'un filtre (10) pour notamment du fluide gazeux, notamment de l'air, notamment d'un moteur à combustion interne, notamment d'un véhicule automobile et/ou d'une machine, lequel élément filtrant peut être installé dans un boîtier de filtre (12) du filtre (10) dans un sens de montage (22), qui s'étend parallèlement ou coaxialement par rapport à un axe de montage (18), avec au moins un soufflet de filtre (88) présentant au moins un milieu filtrant (92), dans lequel le soufflet de filtre (88), au moins au nombre d'un, présente un côté d'écoulement (94, 96) pour le fluide sur des côtés axialement opposés par rapport à un axe d'élément (16) s'étendant perpendiculairement ou transversalement à l'axe de montage (18), dans lequel le soufflet de filtre (88), au moins au nombre d'un, présente un côté transversal avant et arrière par rapport au sens de montage (22), dans lequel les côtés transversaux sont axialement opposés par rapport au sens de montage (22), dans lequel le soufflet de filtre (88), au moins au nombre d'un, présente deux côtés longitudinaux s'étendant sur des côtés opposés entre les côtés d'écoulement (94, 96) et les côtés transversaux de l'élément filtrant (14), et avec au moins un joint d'étanchéité (76), qui est disposé par rapport à l'axe de l'élément (16) circonférentiellement au moins partiellement cohérant au moins par sections sur un côté circonférentiel radialement extérieur de l'élément filtrant (14) par rapport à l'axe de l'élément (16), dans lequel l'élément filtrant (14) présente au moins un dispositif de support du joint d'étanchéité (82) sur au moins une face extérieure, dans lequel le dispositif de support du joint d'étanchéité (82), au moins au nombre d'un, est disposé au moins sur un côté longitudinal de l'élément filtrant, **caractérisé en ce qu'**au moins un dispositif de support du joint d'étanchéité (82) présente une surface d'appui frontale (120), côté élément, opposée au joint d'étanchéité, disposée dans la zone du côté transversal frontal par rapport au sens de montage (22) et au moins une surface d'appui arrière (122), côté élément, opposée au joint d'étanchéité, disposée dans la zone du côté transversal arrière, dans lequel la surface d'appui frontale (120), côté élément, au moins au nombre d'une, opposée au joint d'étanchéité, et la surface d'appui arrière (122), côté élément, au moins au nombre d'une, opposée au joint d'étanchéité, sont inclinées l'une par rapport à l'autre selon un angle compris entre environ 10° et environ 30°, notamment environ 20° et la surface d'appui arrière (122), côté élément, au moins au nombre d'une, opposée au joint d'étanchéité, s'étend parallèlement à une surface d'appui notamment arrière (118), côté élément, au moins au nombre d'une, orientée vers le joint d'étanchéité et au moins une partie de la surface d'appui (118), côté élément, au moins au nombre d'une, orientée vers le joint d'étanchéité, et au moins une partie de la surface d'appui frontale (120), côté élément, opposée au joint d'étanchéité, forment un ensemble cunéiforme, dans lequel une pointe de l'ensemble cunéiforme est pointée approximativement dans le sens de montage (22).

2. Élément filtrant selon la revendication 1, **caractérisé en ce qu'**au moins une surface d'appui (118) côté élément, orientée vers un joint d'étanchéité (76), au moins au nombre d'un, et au moins une surface d'appui (120, 122) côté élément, opposée au joint d'étanchéité (76), au moins au nombre d'un, d'au moins un dispositif de support du joint d'étanchéité (82) s'étendent obliquement l'une par rapport à l'autre au moins par sections.

3. Élément filtrant selon la revendication 1 ou 2, **caractérisé en ce qu'**au moins une surface d'appui (120, 122), côté élément, opposée au joint d'étanchéité, s'étend au moins par sections parallèlement ou obliquement à au moins une surface d'écoulement (94, 96), notamment à un niveau d'écoulement, du soufflet de filtre (88) et/ou parallèlement ou obliquement par rapport à l'axe de montage (18).

4. Élément filtrant selon l'une quelconque des revendications précédentes, **caractérisé en ce qu'**au moins un dispositif de support du joint d'étanchéité (82) est réalisé sur un cadre, s'étendant au moins partiellement de manière circonférentielle par rapport à l'axe de l'élément (16), notamment un cadre d'élément (90) ou cadre de support ou est réalisé comme tel.

5. Élément filtrant selon l'une quelconque des revendications précédentes, **caractérisé en ce qu'**au moins un dispositif de support du joint d'étanchéité (82) est relié de manière séparable ou non destructive de manière séparable à au moins un soufflet de filtre (88) de l'élément filtrant (14).

6. Élément filtrant selon l'une quelconque des revendications précédentes, comprenant un cadre d'élément (90), dans lequel le cadre d'élément (90) entoure au moins partiellement de manière circonférentielle le soufflet de filtre (88) par rapport à un axe d'élément (16), dans lequel l'axe d'élément (16) s'étend perpendiculairement ou transversalement à un axe de montage (18) de l'élément filtrant (14) dans un boîtier de filtre (12), dans lequel le cadre d'élément (90) présente le dispositif de support du joint d'étanchéité (82).

7. Élément filtrant selon l'une quelconque des revendications précédentes, dans lequel le dispositif de support du joint d'étanchéité (82) présente au moins une surface d'appui (118), côté élément, orientée vers le joint d'étanchéité, sur laquelle repose, par transmission de force, au moins un joint d'étanchéité (76) avec une face arrière du joint d'étanchéité (102), dans lequel la face arrière du joint d'étanchéité (102) est située sur la surface d'étanchéité axiale (98), au nombre d'une, tournée axialement à l'opposé du joint d'étanchéité (76), au moins au nombre d'un, par rapport à l'axe d'élément (16).

8. Filtre (10) pour notamment du fluide gazeux, notamment de l'air, notamment d'un moteur à combustion interne, notamment d'un véhicule automobile, avec au moins un boîtier de filtre (12) dans lequel est disposé au moins un élément filtrant (14) selon l'une des revendications précédentes 1 à 7, dans lequel le boîtier de filtre (12), au moins au nombre d'un, présente au moins une ouverture d'admission (36) pour le fluide à purifier et au moins une ouverture d'évacuation (40) pour le fluide purifié, dans lequel l'élément filtrant (14) est disposé dans un espace de logement d'élément (28) du boîtier de filtre (12), au moins au nombre d'un, de sorte qu'il sépare une ouverture d'admission (36), au moins au nombre d'une, d'une ouverture d'évacuation (40), au moins au nombre d'une, dans lequel le boîtier de filtre (12) présente un corps de boîtier (24) avec au moins une ouverture de montage (46) vers l'espace de logement d'élément (28) par laquelle l'élément filtrant (14), au moins au nombre d'un, peut être introduit dans un espace de logement d'élément (28) du corps de boîtier (24) dans un sens de montage (22) qui s'étend parallèlement ou coaxialement à un axe de montage (18), et le boîtier de filtre (12), au moins au nombre d'un, présente au moins un couvercle de boîtier (26) qui permet de fermer l'ouverture de montage ouvrable (46), dans lequel l'ouverture de montage (46), au moins au nombre d'une, est disposée, par rapport à un axe de boîtier (16), dans un côté transversal du corps de boîtier (24), et le boîtier de filtre (12), au moins au nombre d'un, présente au moins une surface d'étanchéité (44) destinée à appliquer au moins un joint d'étanchéité (76) de l'élément filtrant (14), au moins au nombre d'un, et qui entoure l'axe de boîtier (16) au moins partiellement de manière circonférentielle, dans lequel le boîtier de filtre (12) présente au moins un dispositif de pression (60) pour un dispositif de support du joint d'étanchéité (82) de l'élément filtrant (14), au moins au nombre d'un.

9. Filtre selon la revendication 8, le boîtier de filtre ayant au moins une ouverture d'admission (36) pour le fluide à purifier et au moins une ouverture d'évacuation (40) pour le fluide purifié, dans lequel l'élément filtrant (14), au moins au nombre d'un, est disposé dans un espace de logement d'élément (28) du boîtier de filtre (12) de sorte qu'il sépare une ouverture d'admission (36), au moins au nombre d'une, d'une ouverture d'évacuation (40), au moins au nombre d'une, dans lequel le boîtier de filtre (12) présente un corps de boîtier (24) avec au moins une ouverture de montage (46) vers l'espace de logement d'élément (28) par laquelle l'élément filtrant (14), au moins au nombre d'un, est introduit dans un espace de logement d'élément (28) du corps de boîtier (24) dans un sens de montage (22) qui s'étend parallèlement ou coaxialement à un axe de montage (18), et le boîtier de filtre (12) présente au moins un couvercle de boîtier (26) qui permet de fermer l'ouverture de montage ouvrable (46), dans lequel l'ouverture de montage (46), au moins au nombre d'une, est disposée, par rapport à un axe de boîtier (16), dans un côté transversal du corps de boîtier (24), et le boîtier de filtre (12) présente au moins une surface d'étanchéité (44) destinée à appliquer au moins un joint d'étanchéité (76) de l'élément filtrant (14), au moins au nombre d'un, et qui entoure l'axe de boîtier (16) au moins partiellement de manière circonférentielle, dans lequel le boîtier de filtre (12) présente au moins un dispositif de pression (60) pour un dispositif de support du joint d'étanchéité (82) de l'élément filtrant (14), au moins au nombre d'un.

10. Filtre selon la revendication 8 ou 9, **caractérisé en ce qu'**au moins un dispositif de pression (60) présente au moins une surface de pression (62, 64), côté boîtier, qui est disposée sur le côté de l'espace de logement d'élément (28) axialement opposé à la surface d'étanchéité (44), au moins au nombre d'une, par rapport à l'axe de boîtier (16).

11. Filtre selon l'une quelconque des revendications 8 à 10, **caractérisé en ce qu'**au moins une surface de pression (62, 64), côté boîtier, s'étend obliquement par rapport à la surface d'étanchéité (44), au moins au nombre d'une.

12. Filtre selon l'une quelconque des revendications 8 à 11, **caractérisé en ce qu'**au moins une surface de pression frontale (62), côté boîtier, est située sur le côté du corps de boîtier (24) axialement opposé à l'ouverture de montage (46) par rapport à un sens de montage (22) de l'élément filtrant (14) dans le corps de boîtier (24).

13. Filtre selon l'une quelconque des revendications 8 à 12, **caractérisé en ce qu'**au moins un couvercle de boîtier (26) présente au moins une lame de pression (74) avec au moins une surface de pression (78).

14. Filtre selon l'une quelconque des revendications 8 à 13, **caractérisé en ce que,** en état fermé du couvercle de boîtier (26), au moins une surface de pression (78), côté couvercle, orienté vers le joint d'étanchéité, s'étend au moins par sections obliquement par rapport à l'axe de montage (18) et/ou au moins par sections parallèlement par rapport à la surface d'étanchéité (44), côté boîtier.
